# EUROPEAN PATENT SPECIFICATION

(11) **EP 4 225 588 B1**
(45) Date of publication and mention of the grant of the patent: **27.11.2024**
(21) Application number: 21801337.3
(22) Date of filing: 05.10.2021
(51) Int. Cl.: B60C 1/00, C08L 15/00, C08L 9/06, C08K 3/36, C08K 3/04, C08L 57/02

(54) **TIRE TREAD RUBBER COMPOSITION AND RELATED METHODS**
REIFENLAUFFLÄCHENKAUTSCHUKZUSAMMENSETZUNG UND ZUGEHÖRIGE VERFAHREN
COMPOSITION DE CAOUTCHOUC POUR BANDE DE ROULEMENT DE PNEU ET PROCÉDÉS ASSOCIÉS

(30) Priority: 05.10.2020 US 202063087648 P
(43) Date of publication of application: 16.08.2023
(73) Proprietor: Bridgestone Americas Tire Operations, LLC, Nashville, TN 37201 (US)
(72) Inventor: YAMAGISHI, Yasushi, Tokyo 104--8340 (JP); HOWMAN, Kenny L., Ashland, Ohio 44805 (US); GALIZIO, Benjamin C., Munroe Falls, Ohio 44262 (US)
(74) Representative: Marks & Clerk LLP
(86) International application number: PCT/US2021/053545
(87) International publication number: WO 2022/076391

(56) References cited:
- WO-A1-2020/032053
- JP-B2- 5 189 253
- US-B2- 9 284 438

## Description

### FIELD

The present application is directed to tire tread rubber compositions and related methods.

### BACKGROUND

Tires comprise many components including a road-contacting tread. The particular ingredients used to prepare the rubber composition which comprises the tire tread may vary. Formulation of tire tread rubber compositions is a complex science since changes to the formulation which result in an improvement in one property (*e.g*., wet performance) may result in deterioration of another property (*e.g*., dry traction). US9284438 discloses a tire tread rubber composition exhibiting a balance of fuel economy performance and wet-grip performance.

### SUMMARY

Disclosed herein are rubber compositions for tire treads and related methods.

According to the first embodiment disclosed herein, a tire tread rubber composition is disclosed. The tire tread rubber composition of the first embodiment is made of ingredients comprising: (a) 100 parts of an elastomer component comprising: (i) 51-75 parts of at least one styrene-butadiene rubber having a silica-reactive functional group and a Tg of about -50 to about -35 °C, preferably about -50 to about -40 °C, and (ii) 25-49 parts of at least one non-functionalized styrene-butadiene rubber having a Tg of about -30 to about -15 °C, preferably about -25 to about -15 °C; (b) at least one reinforcing silica filler in an amount of 60-90 phr, preferably having a BET surface area of about 200 to about 350 m²/g; (c) no more than 10 phr of carbon black filler; (d) 2-14 phr of at least one hydrocarbon resin having a Tg of about 40 to about 60 °C; (e) 15-35 phr of liquid plasticizer; and (f) a cure package, wherein at least a portion of (e) is provided by a low molecular weight styrene-butadiene rubber.

According to the second embodiment disclosed herein, a tire which includes a road-contacting tread is disclosed. The road-contacting tread of the tire of the second embodiment comprises the tire tread rubber composition according to the first embodiment disclosed herein.

According to third embodiment disclosed herein, a method for providing a tire with a road-contacting tread is provided. According to this embodiment, the tire has balanced wet performance, rolling resistance and concerning performance and the method comprises utilizing the tire tread rubber composition according to the first embodiment in the road contacting tread.

### DETAILED DESCRIPTION

Disclosed herein are rubber compositions for tire treads and related methods.

According to the first embodiment disclosed herein, a tire tread rubber composition is disclosed. The tire tread rubber composition of the first embodiment is made of ingredients comprising: (a) 100 parts of an elastomer component comprising: (i) 51-75 parts of at least one styrene-butadiene rubber having a silica-reactive functional group and a Tg of about -50 to about -35 °C, preferably about -50 to about -40 °C, and (ii) 25-49 parts of at least one non-functionalized styrene-butadiene rubber having a Tg of about -30 to about -15 °C, preferably about -25 to about -15 °C; (b) at least one reinforcing silica filler in an amount of 60-90 phr, preferably having a BET surface area of about 200 to about 350 m²/g; (c) no more than 10 phr of carbon black filler; (d) 2-14 phr of at least one hydrocarbon resin having a Tg of about 40 to about 60 °C; (e) 15-35 phr of liquid plasticizer; and (f) a cure package, wherein at least a portion of (e) is provided by a low molecular weight styrene-butadiene rubber.

According to the second embodiment disclosed herein, a tire which includes a road-contacting tread is disclosed. The road-contacting tread of the tire of the second embodiment comprises the tire tread rubber composition according to the first embodiment disclosed herein.

According to third embodiment disclosed herein, a method for providing a tire with a road-contacting tread is provided. According to this embodiment, the tire has balanced wet performance, rolling resistance and concerning performance and the method comprises utilizing the tire tread rubber composition according to the first embodiment in the road contacting tread.

### Definitions

The terminology as set forth herein is for description of the embodiments only and should not be construed as limiting the invention as a whole.

As used herein, the term "BR" or "polybutadiene" refers to homopolymer of 1,3-butadiene.

As used herein, the term "majority" refers to more than 50% (*e.g.,* at least 50.1%, at least 50.5%, at least 51%, etc.).

As used herein, the term "minority" refers to less than 50% (*e.g*., no more than 49.5%, no more than 49%, etc.).

As used herein, the abbreviation Mn is used for number average molecular weight.

As used herein, the abbreviation Mp is used for peak molecular weight.

As used herein, the abbreviation Mw is used for weight average molecular weight.

Unless otherwise indicated herein, the term "Mooney viscosity" refers to the Mooney viscosity, ML₁₊₄. As those of skill in the art will understand, a rubber composition's Mooney viscosity is measured prior to vulcanization or curing.

As used herein, the term "natural rubber" means naturally occurring rubber such as can be harvested from sources such as *Hevea* rubber trees and non-Hevea sources (*e.g.,* guayule shrubs and dandelions such as TKS). In other words, the term "natural rubber" should be construed so as to exclude synthetic polyisoprene.

As used herein, the term "phr" means parts per one hundred parts rubber. The one hundred parts rubber is also referred to herein as 100 parts of an elastomer component.

As used herein the term "polyisoprene" means synthetic polyisoprene. In other words, the term is used to indicate a polymer that is manufactured from isoprene monomers, and should not be construed as including naturally occurring rubber (*e.g., Hevea* natural rubber, guayule-sourced natural rubber, or dandelion-sourced natural rubber). However, the term polyisoprene should be construed as including polyisoprenes manufactured from natural sources of isoprene monomer.

As used herein the term "SBR" means styrene-butadiene copolymer rubber.

As used herein, the term "tread," refers to both the portion of a tire that comes into contact with the road under normal inflation and load as well as any subtread.

### Tire Tread Rubber Composition

As mentioned above, the first embodiment disclosed herein is directed to a tire tread rubber compositions made of specified ingredients, the second embodiment is directed to a tire including a road-contacting tread comprising the tire tread rubber composition of the first embodiment, and the third embodiment disclosed herein is directed to a method of providing a tire with a road-contacting tread which has balanced wet performance, rolling resistance and cornering performance, the method comprising utilizing the tire tread rubber composition of the first embodiment in the road-contacting tread. The subject rubber compositions are used in preparing treads for tires, generally by a process which includes forming of a tread pattern by molding and curing one of the subject rubber compositions. Thus, the tire treads will contain a cured form of one of the tire tread rubber compositions. The tire tread rubber compositions may be present in the form of a tread which has been formed but not yet incorporated into a tire and/or they may be present in a tread which forms part of a tire.

According to the first-third embodiments disclosed herein, the Tg of the overall rubber composition may vary. The Tg of the overall rubber composition may be referred to as a compound Tg or as a rubber composition Tg. In certain embodiments of the first-third embodiments, the rubber composition has a compound Tg of 10 to -20 °C (*e.g.,* 10, 8, 6, 5, 4, 2, 0, -2, -4, -5, -6, -8, -10, -12, -14, -15, -16, -18, or -20 °C), preferably about 0 to about -15 °C or 0 to 15 °C (*e.g.,* 0, -2, -4, -5, -6, -8, -10, -12, -14, -15 °C). The compound Tg of a rubber composition can be measured using a dynamic mechanical thermal spectrometer (such as the Gabo instrument described below, operating in tension mode) generally following the guidelines of ASTM D5992-96 (2011) and using a temperature sweep (from -70 to 65 °C), under specified test conditions (*i.e*., frequency 52 Hz, static strain of 6%, dynamic strain of 0.1%, sample geometry 4.75 mm wide x 29 mm long x 2 mm deep), with the measurement made on the sample after curing for 15 minutes at 170 °C, and using a vibratory method to estimate the Tg from the curve that results.

### Elastomer Component

As discussed above, according to the first-third embodiments, the tire tread rubber composition comprises (includes) 100 parts of an elastomer component comprising: (i) 51-75 parts of at least one styrene-butadiene rubber having a silica-reactive functional group and a Tg of about -50 to about -35 °C, and (ii) 25-49 parts of at least one non-functionalized styrene-butadiene rubber having a Tg of about -30 to about -15 °C. In preferred embodiments of the first-third embodiments, at least 90% by weight (*e.g*., 90%, 91%, 92%, 93%, 94%, 95%, 96%, 97%, 98%, 99% or more) of the elastomer component is comprised of the at least one SBR (i) and the at least SBR (ii), and the remaining portion of the elastomer component (*e.g*., 10%, 9%, 8%, etc.) is comprised of one or more additional rubbers, preferably selected from conjugated-diene containing polymers, as discussed below. In certain such embodiments of the first-third embodiments, 100% by weight of the elastomer component is the at least one SBR (i) and the at least one SBR (ii); in other words, in such embodiments, the at least one SBR (i) and at least one SBR (ii) are the only types of rubbers present in the elastomer component.

According to the first-third embodiments disclosed herein, the Tg of the elastomer component may vary. In certain embodiments of the first-third embodiments, the elastomer component has an average Tg of about -50 to about -20 °C or -50 to -20 °C (*e.g.,* -50, -48, -46, - 45, -44, -42, -40, -38, -36, -35, -34, -32, -30, -28, -26, -25, -24, -22, or -20 °C), preferably about -45 to about -25 °C or -45 to -25 °C (*e.g.,* -45, -44, -42, -40, -38, -36, -35, -34, -32, -30, -28, -26, or -25 °C). The average Tg of the elastomer component can be calculated using the Tg of each rubber present in the 100 parts of elastomer component and accounting for their relative weight percentage. When one (or more) of the rubbers is oil-extended, only the amount of rubber (*i.e*., excluding any amount of oil) is utilized in calculating the average Tg of the elastomer component. When one (or more) of the rubbers is oil-extended, the Tg of non-oil extended rubber is utilized in calculating the average Tg of the elastomer component.

### Functionalized Styrene-Butadiene Rubber

As discussed above, according to the first-third embodiments disclosed herein, the elastomer component of the tire tread rubber composition comprises (includes) 51-75 parts by weight (*e.g*., 51, 52, 53, 54, 55, 56, 57, 58, 59, 60, 61, 62, 63, 64, 65, 66, 67, 68, 69, 70, 71, 72, 73, 74, or 75 parts) of at least one styrene-butadiene rubber having a silica-reactive functional group and a Tg of about -50 to about -35 °C or -50 to -35 °C (*e.g*., -50, -49, -48, -47, -46, -45, -44, -43, - 42, -41, -40, -39, -38, -37, -36 or -35 °C). Since the at least one SBR (i) is present in an amount of at least 51 phr, it can be considered to be the majority component (by weight) of the elastomer component of the tire tread rubber composition according to the first-third embodiments. In certain preferred embodiments of the first-third embodiments disclosed herein, the Tg of the at least one SBR having a silica-reactive functional group is about -50 to about -40 °C or -50 to -40 °C (*e.g*., -50, -49, -48, -47, -46, -45, -44, -43, -42, -41, -40 °C). In certain embodiments of the first-third embodiments disclosed herein, only one SBR having a silica-reactive functional group and a Tg of about -50 to about -35 °C or -50 to -35 °C is used in the tire tread rubber composition; in certain such embodiments no other functionalized SBR is present in the tire tread rubber composition (*i.e*., the only functionalized SBR is the tire tread rubber composition is the SBR (i) having a silica-reactive functional group and a Tg of about -50 to about -35 °C or -50 to -35 °C. In other embodiments of the first-third embodiments disclosed herein, two SBRs having a silica-reactive functional group and a Tg of about -50 to about -35 °C or -50 to -35 °C is used in the tire tread rubber composition. In certain preferred embodiments of the first-third embodiments disclosed herein, the at least one SBR having a silica reactive functional group and a Tg of about -50 °C to about -35 or -50 to -35 °C is present in an amount of 55-70 parts by weight (*e.g*., 55, 56, 57, 58, 59, 60, 61, 62, 63, 64, 65, 66, 67, 68, 69, 70, 71, 72, 73, 74 or 75 parts) or 55-65 parts by weight (*e.g*., 55, 56, 57, 58, 59, 60, 61, 62, 63, 64, or 65 parts) of the 100 parts of the elastomer component.

In certain embodiments of the first-third embodiments disclosed herein, the at least one SBR (i) has a Mw of about 300,000 to about 550,000 grams/mole or 300,000 to 550,000 grams/mole (*e.g*., 300,000; 325,000; 350,000; 375,000; 400,000; 425,000; 450,000; 475,000; 500,000; 525,000; or 550,000 grams/mole), preferably about 300,000 to about 500,000 or 300,000 to 500,000 grams/mole (*e.g*., 300,000; 325,000; 350,000; 375,000; 400,000; 425,000; 450,000; 475,000; or 500,000 grams/mole), more preferably about 350,000 to about 450,000 or 350,000 to 450,000 grams/mole (*e.g*., 350,000; 375,000; 400,000; 425,000; or 450,000 grams/mole), according to a polystyrene standard (and can be determined by GPC). In certain embodiments of the first-third embodiments disclosed herein, the at least one SBR (i) has a Mn of about 250,000 to about 450,000 grams/mole or 250,000 to 450,000 grams/mole (*e.g*., 250,000; 275,000; 300,000; 325,000; 350,000; 375,000; 400,000; 425,000; or 450,000 grams/mole), preferably about 300,000 to about 400,000 grams/mole or 300,000 to 400,000 grams/mole (*e.g*., 300,000; 325,000; 350,000; 375,000; or 400,000 grams/mole), according to a polystyrene standard (and can be determined by GPC). Since the at least one SBR (i) is a functionalized polymer, it should be understood that the foregoing Mw and Mn values refer to coupled Mw and coupled Mn rather than base polymer values.

Generally, a styrene-butadiene rubber having a silica-reactive functional group can be considered to be a functionalized polymer or functionalized SBR. Non-limiting examples of silica-reactive functional groups generally include nitrogen-containing functional groups, silicon-containing functional groups, oxygen- or sulfur-containing functional groups, and metal-containing functional groups, as discussed in more detail below.

When the at least one styrene-butadiene rubber having a silica-reactive functional group is prepared, the functionalization can be achieved by adding a functional group to one or both terminus of the polymer, by adding a functional group to the backbone of the poly (or a combination of the foregoing) or by coupling more than one polymer chains to a coupling agent, or by a combination thereof. Such effects can be achieved by treating a living polymer with coupling agents, functionalizing agents, or a combination thereof which serve to couple and/or functionalize other chains. In certain embodiments of the first-third embodiments, the at least one styrene-butadiene rubber having a silica-reactive functional group contains one or more functional groups but is not coupled (*i.e*., does not contain any coupling agents). Generally, a coupling agent and/or functionalizing agent can be used at various molar ratios. Alternatively, in certain embodiments of the first-third embodiments, the functionalized SBR (i) may be silica-reactive merely from the result of using a coupling agent. Although reference is made herein to the use of both coupling agents and functionalizing groups (and compounds used therefor), those skilled in the art appreciate that certain compounds may serve both functions. That is, certain compounds may both couple and provide the polymer chains with a functional group. Those skilled in the art also appreciate that the ability to couple polymer chains may depend upon the amount of coupling agent reacted with the polymer chains. For example, advantageous coupling may be achieved where the coupling agent is added in a one to one ratio between the equivalents of lithium on the initiator and equivalents of leaving groups (*e.g*., halogen atoms) on the coupling agent. Non-limiting examples of coupling agents include metal halides, metalloid halides, alkoxysilanes, alkoxystannanes, and combinations thereof.

Non-limiting examples of nitrogen-containing functional groups that can be utilized in certain embodiments of the first-third embodiments as a silica-reactive functional group in the at least one SBR (i) include, but are not limited to, a substituted or unsubstituted amino group, an amide residue, an isocyanate group, an imidazolyl group, an indolyl group, an imino group, a nitrile group, a pyridyl group, and a ketimine group. In certain preferred embodiments of the first-third embodiments, the at least one SBR (i) has a silica-reactive functional group including, an unsubstituted amino group, a substituted amino group, or substituted imino group. The foregoing substituted or unsubstituted amino group should be understood to include a primary alkylamine, a secondary alkylamine, or a cyclic amine, and an amino group derived from a substituted or unsubstituted imine. In certain embodiments of the first-third embodiments, the at least one SBR (i) of the elastomer component comprises at one silica-reactive functional group selected from the foregoing list of nitrogen-containing functional groups.

In certain embodiments of the first-third embodiments, the at least one SBR (i) includes a silica-reactive functional group from a compound which includes nitrogen in the form of an imino group. Such an imino-containing functional group may be added by reacting the active terminal of a polymer chain with a compound having the following formula (I): 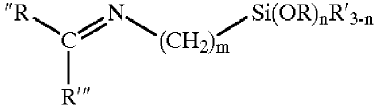 wherein R, R', R", and R‴ each independently are selected from a group having 1 to 18 carbon atoms (*e.g*., 1, 2, 3, 4, 5, 6, 7, 8, 9, 10, 11, 12, 13, 14, 15, 16, 17, or 18 carbon atoms) selected from the group consisting of an alkyl group, an allyl group, and an aryl group; m and n are integers of 1 to 20 (*e.g.,* 1, 2, 3, 4, 5, 6, 7, 8, 9, 10, 11, 12, 13, 14, 15, 16, 17, 18, 19, or 20) and 1 to 3 (1, 2, or 3), respectively. Each of R, R', R", and R‴ are preferably hydrocarbyl and contain no heteroatoms. In certain embodiments of the first-third embodiments, each R and R' are independently selected from an alkyl group having 1 to 6 carbon atoms (*e.g*., 1, 2, 3, 4, 5, or 6 carbon atoms), preferably 1 to 3 carbon atoms (*e.g*., 1, 2, or 3 carbon atoms). In certain embodiments of the first-third embodiments, m is an integer of 2 to 6 *(e.g.,* 2, 3, 4, 5, or 6), preferably 2 to 3. In certain embodiments of the first-third embodiments, R‴ is selected from a group having 1 to 6 carbon atoms (*e.g*., 1, 2, 3, 4, 5, or 6 carbon atoms), preferably 2 to 4 carbon atoms (*e.g*., 2, 3, or 4 carbon atoms). In certain embodiments of the first-third embodiments, R" is selected from an alkyl group having 1 to 6 carbon atoms (*e.g*., 1, 2, 3, 4, 5, or 6 carbon atoms), preferably 1 to 3 carbon atoms (*e.g*., 1, 2, or 3 carbon atoms), most preferably 1 carbon atom (*e.g*., methyl). In certain embodiments of the first-third embodiments, n is 3 resulting in a compound with a trihydrocarboxysilane moiety such as a trialkoxysilane moiety. Non-limiting examples of compounds having an imino group and meeting formula (I) above, which are suitable for providing the silica-reactive functional group for the SBR include, but are not limited to, N-(1,3-dimethylbutylidene)-3-(triethoxysilyl)-1-propaneamine, N-(1-methylethylidene)-3-(triethoxysilyl)-1-propaneamine, N-ethylidene-3-(triethoxysilyl)-1-propaneamine, N-(1-methylpropylidene)-3-(triethoxysilyl)-1-propaneamine, and N-(4-N,N-dimethylaminobenzylidene )-3-( triethoxysilyl)-1-propaneamine.

Non-limiting examples of silicon-containing functional groups that can be utilized in certain embodiments of the first-third embodiments as a silica-reactive functional group in the at least one SBR (i) include, but are not limited to, an organic silyl or siloxy group, and more precisely, such a functional group may be selected from an alkoxysilyl group, an alkylhalosilyl group, a siloxy group, an alkylaminosilyl group, and an alkoxyhalosilyl group. Optionally, the organic silyl or siloxy group may also contain one or more nitrogens. Suitable silicon-containing functional groups for use in functionalizing diene-based elastomers also include those disclosed in U.S. Patent No. 6,369,167. In certain embodiments of the first-third embodiments, the at least one SBR (i) comprises at least one silica-reactive functional group selected from the foregoing list of silicon-containing functional groups.

In certain embodiments of the first-third embodiments, the at least one SBR (i) includes a silica-reactive functional group which includes a silicon-containing functional group having a siloxy group (*e.g*., a hydrocarbyloxysilane-containing compound), wherein the compound optionally includes a monovalent group having at least one functional group. Such a silicon-containing functional group may be added by reacting the active terminal of a polymer chain with a compound having the following formula (II): 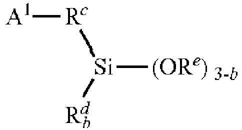 wherein A¹ represents a monovalent group having at least one functional group selected from epoxy, isocyanate, imine, cyano, carboxylic ester, carboxylic anhydride, cyclic tertiary amine, non-cyclic tertiary amine, pyridine, silazane and sulfide; R^{c} represents a single bond or a divalent hydrocarbon group having from 1 to 20 carbon atoms (*e.g*., 1, 2, 3, 4, 5, 6, 7, 8, 9, 10, 11, 12, 13, 14, 15, 16, 17, 18, 19, or 20 carbon atoms); R^{d} represents a monovalent aliphatic hydrocarbon group having 1 to 20 carbon atoms (*e.g*., 1, 2, 3, 4, 5, 6, 7, 8, 9, 10, 11, 12, 13, 14, 15, 16, 17, 18, 19, or 20 carbon atoms), a monovalent aromatic hydrocarbon group having 6 to 18 carbon atoms (*e.g.,* 6, 7, 8, 9, 10, 11, 12, 13, 14, 15, 16, 17, or 18 carbon atoms) or a reactive group; R^{e} represents a monovalent aliphatic hydrocarbon group having 1 to 20 carbon atoms (*e.g*., 1, 2, 3, 4, 5, 6, 7, 8, 9, 10, 11, 12, 13, 14, 15, 16, 17, 18, 19, or 20 carbon atoms) or a monovalent aromatic hydrocarbon group having 6 to 18 carbon atoms (*e.g*., 6, 7, 8, 9, 10, 11, 12, 13, 14, 15, 16, 17, or 18 carbon atoms); b is an integer of 0 to 2; when more than one R^{d} or OR^{e} are present, each R^{d} and/or OR^{e} may be the same as or different from each other; and an active proton is not contained in a molecule) and/or a partial condensation product thereof. As used herein, a partial condensation product refers to a product in which a part (not all) of a SiOR group in the hydrocarbyloxysilane compound is turned into a SiOSi bond by condensation. In certain embodiments of the first-third embodiments, at least one of the following is met: (a) R^{c} represents a divalent hydrocarbon group having 1 to 12 carbon atoms (*e.g*., 1, 2, 3, 4, 5, 6, 7, 8, 9, 10, 11, or 12 carbon atoms), 2 to 6 carbon atoms (*e.g*., 2, 3, 4, 5, or 6 carbon atoms), or 2 to 3 carbon atoms (*e.g*., 2 or 3 carbon atoms); (b) R^{e} represents a monovalent aliphatic hydrocarbon group having 1 to 12 carbon atoms (*e.g*., 1, 2, 3, 4, 5, 6, 7, 8, 9, 10, 11, or 12 carbon atoms), 2 to 6 carbon atoms (*e.g*., 2, 3, 4, 5, or 6 carbon atoms), or 1 to 2 carbon atoms or a monovalent aromatic hydrocarbon group having 6 to 8 carbon atoms; (c) R^{d} represents a monovalent aliphatic hydrocarbon group having 1 to 12 carbon atoms(*e.g*., 1, 2, 3, 4, 5, 6, 7, 8, 9, 10, 11, or 12 carbon atoms), 2 to 6 carbon atoms (*e.g*., 2, 3, 4, 5, or 6 carbon atoms), or 1 to 2 carbon atoms or a monovalent aromatic hydrocarbon group having 6 to 8 carbon atoms; in certain such embodiments, each of (a), (b) and (c) are met and R^{c}, R^{e} and R^{d} are selected from one of the foregoing groups.

In certain embodiments of the first-third embodiments, the silica-reactive functional group of the at least one SBR (i) results from a compound represented by Formula (II) wherein A¹ has at least one epoxy group. Non-limiting specific examples of such compounds include 2-glycidoxyethyltrimethoxysilane, 2-glycidoxyethyltriethoxysilane, (2-glycidoxyethyl)methyldimethoxysilane, 3-glycidoxypropyltrimethoxysilane, 3-glycidoxypropyltriethoxysilane, (3-glycidoxypropyl)-methyldimethoxysilane, 2-(3,4-epoxycyclohexyl)ethyltrimethoxysilane, 2-(3,4-epoxycyclohexyl)ethyltriethoxysilane, 2-(3,4-epoxycyclohexyl)ethyl(methyl)dimethoxysilane and the like. Among them, 3-glycidoxypropyltrimethoxysilane and 2-(3,4-epoxycyclohexyl)ethyltrimethoxysilane are particularly suited.

In certain embodiments of the first-third embodiments, the silica-reactive functional group of the at least one SBR (i) results from a compound represented by Formula (II) wherein A¹ has at least one isocyanate group. Non-limiting specific examples of such compounds include 3-isocyanatopropyltrimethoxysilane, 3-isocyanatopropyltriethoxysilane, 3-isocyanatopropylmethyldiethoxysilane, 3-isocyanatopropyltriisopropoxysilane and the like, and among them, 3-isocyanatopropyltrimethoxysilane is particularly preferred.

In certain embodiments of the first-third embodiments, the silica-reactive functional group of the at least one SBR (i) results from a compound represented by Formula (II) wherein A¹ has at least one imine group. Non-limiting specific examples of such compounds include N-(1,3-dimethylbutylidene)-3-(triethoxysilyl)-1-propaneamine, N-(1-methylethylidene)-3-(triethoxysilyl)-1-propaneamine, N-ethylidene-3-(triethoxysilyl)-1-propaneamine, N-(1-methylpropylidene)-3-(triethoxysilyl)-1-propaneamine, N-(4-N,N-dimethylaminobenzylidene)-3-(triethoxysilyl)-1-propaneamine, N-(cyclohexylidene)-3-(triethoxysilyl)-1-propaneamine and trimethoxysilyl compounds, methyldiethoxysilyl compounds, ethyldimethoxysilyl compounds and the like each corresponding to the above triethoxysilyl compounds. Among them, N-(1,3-dimethylbutylidene)-3-(triethoxysilyl)-1-propaneamine and N-(1-methylpropylidene)-3-(triethoxysilyl)-1-propaneamine are particularly suited. Also, the imine(amidine) group-containing compounds include preferably 1-[3-trimethoxysilyl]propyl]-4,5-dihydroimidazole, 3-(1-hexamethyleneimino)propyl(triethoxy)silane, (1-hexamethyleneimino)methyl(trimethoxy)silane, N-(3-triethoxysilylpropyl)-4,5-dihydroimidazole, N-(3-isopropoxysilylpropyl)-4,5-dihydroimidazole, N-(3-methyldiethoxysilylpropyl)-4,5-dihydroimidazole and the like, and among them, N-(3-triethoxysilylpropyl)-4,5-dihydroimidazole and N-(3-isopropoxysilylpropyl)-4,5-dihydroimidazole are preferred.

In certain embodiments of the first-third embodiments, the functional group of the SBR results from a compound represented by Formula (II) wherein A¹ has at least one carboxylic ester group. Non-limiting specific examples of such compounds include 3-methacryloyloxypropyltriethoxysilane, 3-methacryloyloxypropyltrimethoxysilane, 3-methacryloyloxypropylmethyldiethoxysilane, 3-methacryloyloxypropyltriisopropoxysilane and the like, and among them, 3-methacryloyloxypropyltriethoxysilane is preferred.

In certain embodiments of the first-third embodiments, the silica-reactive functional group of the at least one SBR (i) results from a compound represented by Formula (II) wherein A¹ has at least one carboxylic anhydride group. Non-limiting specific examples of such compounds include 3-trimethoxysilylpropylsuccinic anhydride, 3-triethoxysilylpropylsuccinic anhydride, 3-methyldiethoxysilylpropylsuccinic anhydride and the like, and among them, 3-triethoxysilylpropylsuccinic anhydride is preferred.

In certain embodiments of the first-third embodiments, the silica=reactive functional group of the at least one SBR (i) results from a compound represented by Formula (II) wherein A¹ has at least one cyano group. Non-limiting specific examples of such compounds include 2-cyanoethylpropyltriethoxysilane and the like.

In certain embodiments of the first-third embodiments, the silica-reactive functional group of the at least one SBR (i) results from a compound represented by Formula (II) wherein A¹ has at least one cyclic tertiary amine group. Non-limiting specific examples of such compounds include 3-(1-hexamethyleneimino)propyltriethoxysilane, 3-(1-hexamethyleneimino)propyltrimethoxysilane, (1-hexamethyleneimino)methyltriethoxysilane, (1-hexamethyleneimino)methyltrimethoxysilane, 2-(1-hexamethyleneimino)ethyltriethoxysilane, 3-(1-hexamethyleneimino)ethyltrimethoxysilane, 3-(1-pyrrolidinyl)propyltrimethoxysilane, 3-(1-pyrrolidinyl)propyltriethoxysilane, 3-(1-heptamethyleneimino)propyltriethoxysilane, 3-(1-dodecamethyleneimino)propyltriethoxysilane, 3-(1-hexamethyleneimino)propyldiethoxymethylsilane, 3-(1-hexamethyleneimino)propyldiethoxyethylsilane, 3-[10-(triethoxysilyl)decyl]-4-oxazoline and the like. Among them, 3-(1-hexamethyleneimino)propyltriethoxysilane and (1-hexamethyleneimino)methyltriethoxysilane can preferably be listed.

In certain embodiments of the first-third embodiments, the silica-reactive functional group of the at least one SBR (i) results from a compound represented by Formula (II) wherein A¹ has at least one non-cyclic tertiary amine group. Non-limiting specific examples of such compounds include 3-dimethylaminopropyltriethoxysilane, 3-dimethylaminopropyltrimethoxysilane, 3-diethylaminopropyltriethoxysilane, 3-dimethylaminopropyltrimethoxysilane, 2-dimethylaminoethyltriethoxysilane, 2-dimethylaminoethyltrimethoxysilane, 3-dimethylaminopropyldiethoxymethylsilane, 3-dibutylaminopropyltriethoxysilane and the like, and among them, 3-dimethylaminopropyltriethoxysilane and 3-diethylaminopropyltriethoxysilane are suited.

In certain embodiments of the first-third embodiments, the silica-reactive functional group of the at least one SBR (i) results from a compound represented by Formula (II) wherein A¹ has at least one pyridine group. Non-limiting specific examples of such compounds include 2-trimethoxysilylethylpyridine and the like.

In certain preferred embodiments of the first-third embodiments, the silica-reactive functional group of the at least one SBR (i) results from a compound represented by Formula (II) wherein A¹ has at least one silazane group. Non-limiting specific examples of such compounds include N,N-bis(trimethylsilyl)-aminopropylmethyldimethoxysilane, 1-trimethylsilyl-2,2-dimethoxy-1-aza-2-silacyclopentane, N,N-bis(trimethylsilyl)aminopropyltrimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)aminoethyltriethoxysilane, N,N-bis(trimethylsilyl)aminoethylmethyldimethoxysilane, N,N-bis(trimethylsilyl)aminoethylmethyldiethoxysilane and the like. N,N-bis(trimethylsilyl)aminopropyltriethoxysilane, N,N-bis(trimethylsilyl)aminopropylmethyldiethoxysilane or 1-trimethylsilyl-2,2-dimethoxy-1-aza-2-silacyclopentane are particularly preferred.

In those embodiments of the first-third embodiments wherein a silica-reactive functional group according to formula (II) is used wherein A¹ contains one or more protected nitrogens (as discussed in detail above), the nitrogen(s) may be deprotected or deblocked by hydrolysis or other procedures to convert the protected nitrogen(s) into a primary nitrogen. As a non-limiting example, a nitrogen bonded to two trimethylsilyl groups could be deprotected and converted to a primary amine nitrogen (such a nitrogen would still be bonded to the remainder of the formula (II) compound). Accordingly, in certain embodiments of the first-third embodiments wherein a silica-reactive functional group of the at least one SBR (i) results from use of a compound according to formula (II) wherein A¹ contains one or more protected nitrogens, the functionalized polymer can be understood as containing a functional group resulting from a deprotected (or hydrolyzed) version of the compound.

Non-limiting examples of oxygen- or sulfur-containing functional groups that can be utilized in certain embodiments of the first-third embodiments as a silica-reactive functional group in the at least one SBR (i) include, but are not limited to, a hydroxyl group, a carboxyl group, an epoxy group, a glycidoxy group, a diglycidylamino group, a cyclic dithiane-derived functional group, an ester group, an aldehyde group, an alkoxy group, a ketone group, a thiocarboxyl group, a thioepoxy group, a thioglycidoxy group, a thiodiglycidylamino group, a thioester group, a thioaldehyde group, a thioalkoxy group, and a thioketone group. In certain embodiments of the first-third embodiments, the foregoing alkoxy group may be an alcohol-derived alkoxy group derived from a benzophenone. In certain embodiments of the first-third embodiments, the at least one SBR (i) comprises at least one silica-reactive functional group selected from the foregoing list of oxygen- or sulfur-containing functional groups.

According to the first-third embodiments, the at least one SBR (i) having a silica-reactive functional group may be prepared by either solution polymerization or by emulsion polymerization. In certain preferred embodiments of the first-third embodiments, the only SBR(s) having a silica-reactive functional group is (are) prepared by solution polymerization. In other embodiments of the first-third embodiments, the only SBR(s) a silica-reactive functional group is (are) prepared by emulsion polymerization. In certain embodiments of the first-third embodiments, when more than one SBR having a silica-reactive functional group is used, the rubbers are a combination of solution polymerized SBR and emulsion polymerized SBR (e.g., one solution SBR and one emulsion SBR). In certain embodiments of the first-third embodiments, the only SBR(s) present in the elastomer component (including for the at least one SBR having a silica-reactive functional group) is (are) solution SBRs (*i.e*., no emulsion SBR is present).

### Non-Functionalized Styrene-Butadiene Rubber

As discussed above, according to the first-third embodiments disclosed herein, the elastomer component of the tire tread rubber composition comprises (includes) 25-49 parts (*e.g*., 25, 26, 27, 28, 29, 30, 31, 32, 33, 34, 35, 36, 37, 38, 39, 40, 41, 42, 43, 44, 45, 46, 47, 48, or 49 parts) of at least one non-functionalized styrene-butadiene rubber having a Tg of about -30 to about -15 °C or -30 to -15 °C (*e.g.,* -30, -29, -28, -27, -26, -25, -24, -23, -22, -21, -20, -19, -18, -17, -16, or -15 °C). In preferred embodiments of the first-third embodiments, the non-functionalized SBR (ii) has a Tg of about -25 to about -15 °C or -25 to -15 °C (*e.g*., -25, -24, -23, -22, -21, -20, -19, -18, -17, -16, or -15 °C). In certain preferred embodiment of the first-third embodiments, the at least one SBR (ii), having a Tg as discussed above, is present in an amount of 35 to 45 parts (*e.g*., 35, 36, 37, 38, 39, 40, 41, 42, 43, 44, or 45 parts).

In certain embodiments of the first-third embodiments, the elastomer component includes (only) one SBR (ii) which is non-functionalized and has a Tg as discussed above. In other embodiments of the first-third embodiments, the elastomer component includes two SBRs (ii) which are both non-functionalized and independently have a Tg as discussed above. In certain embodiments of the first-third embodiments disclosed herein, the at least one SBR (ii) includes an SBR that is extended with a low molecular weight SBR (as described below). In certain embodiments of the first-third embodiments, the at least one SBR (ii) includes an SBR that is not extended with any type of liquid plasticizer (*e.g*., oil). In certain embodiments of the first-third embodiments, the at least one SBR (ii) includes a combination of an SBR that is extended with a lower molecular weight SBR and an SBR that is not extended with any type of liquid plasticizer or oil.

In certain embodiments of the first-third embodiments disclosed herein, the at least one SBR (ii) has a Mw of about 400,000 to about 700,000 grams/mole or 400,000 to 700,000 grams/mole (*e.g*., 400,000; 425,000; 450,000; 475,000; 500,000; 525,000; 550,000; 575,000; 600,000; 625,000; 650,000; 675,000; or 700,000 grams/mole), preferably about 300,000 to about 500,000 or 300,000 to 500,000 grams/mole (*e.g*., 300,000; 325,000; 350,000; 375,000; 400,000; 425,000; 450,000; 475,000; or 500,000 grams/mole), more preferably about 350,000 to about 450,000 or 350,000 to 450,000 grams/mole (*e.g*., 350,000; 375,000; 400,000; 425,000; or 450,000 grams/mole), according to a polystyrene standard (and can be determined by GPC). In certain embodiments of the first-third embodiments disclosed herein, the at least one SBR (i) has a Mn of about 250,000 to about 450,000 grams/mole or 250,000 to 450,000 grams/mole (*e.g*., 250,000; 275,000; 300,000; 325,000; 350,000; 375,000; 400,000; 425,000; or 450,000 grams/mole), preferably about 300,000 to about 400,000 grams/mole or 300,000 to 400,000 grams/mole (*e.g*., 300,000; 325,000; 350,000; 375,000; or 400,000 grams/mole), according to a polystyrene standard (and can be determined by GPC). When the at least one SBR (ii) includes a SBR that is extended with a low molecular weight (SBR), as discussed below, it can be preferable to use a SBR for (ii) which has a Mw in the upper portion of the above-disclosed ranges, *e.g*., 500,000 to 700,000 grams/mole, preferably 550,000 to 700,000 grams/mole or 600,000 to 700,000 grams/mole, with the understanding that the use of a lower Mw SBR for the low molecular weight SBR may lower the average Mw and/or Mn in the extended version of the SBR (ii).

According to the first-third embodiments disclosed herein, the styrene content of the at least one SBR (ii) may vary. In certain preferred embodiments of the first-third embodiments, the at least one SBR (ii) has a styrene content of 30 to 50% (*e.g.,* 30, 32, 34, 35, 36, 38, 40, 42, 44, 45, 46, 48, or 50%), more preferably 35 to 45% (*e.g*., 35, 36, 37, 38, 39, 40, 41, 42, 43, 44, or 45%). According to the first-third embodiments disclosed herein, the vinyl bond content of the at least one SBR (ii) may vary. In certain preferred embodiments of the first-third embodiments, the at least one SBR (ii) has a vinyl bond content of 15 to 35% (*e.g*., 15, 16, 18, 20, 22, 24, 25, 26, 28, 30, 32, 34, or 35%), more preferably 20 to 30% (*e.g.,* 20, 21, 22, 23, 24, 25, 26, 27, 28, 29 or 30%). The vinyl bond contents referred to herein should be understood as being for the overall vinyl bond content in the SBR polymer chain rather than of the vinyl bond content in the butadiene portion of the SBR polymer chain, and can be determined by H¹-NMR and C¹³-NMR (*e.g*., using a 300 MHz Gemini 300 NMR Spectrometer System (Varian)). The styrene contents disclosed herein can be determined using a similar method and the same instrumentation. In certain embodiments of the first-third embodiments, the at least one SBR (ii) has a vinyl bond content and styrene content within one of the foregoing ranges, optionally in combination with one or more of the Mw, Mn, and/or Mw/Mn ranges discussed above.

According to the first-third embodiments, the at least one SBR (i) having a silica-reactive functional group may be prepared by either solution polymerization or by emulsion polymerization. In certain preferred embodiments of the first-third embodiments, the only SBR(s) having a silica-reactive functional group is (are) prepared by solution polymerization. In other embodiments of the first-third embodiments, the only SBR(s) a silica-reactive functional group is (are) prepared by emulsion polymerization. In certain embodiments of the first-third embodiments, when more than one SBR having a silica-reactive functional group is used, the rubbers are a combination of solution polymerized SBR and emulsion polymerized SBR (*e.g*., one solution SBR and one emulsion SBR). In certain preferred embodiments of the first-third embodiments, the only SBR(s) present in the elastomer component (including for the at least one SBR (i) having a silica-reactive functional group and the at least one non-functionalized SBR (ii)) are solution SBRs (*i.e*., no emulsion SBR is present).

### Low Molecular Weight Styrene-Butadiene Rubber

As discussed above, according to the first-third embodiments, disclosed herein, the elastomer component of the tire tread rubber composition includes a low molecular weight styrene-butadiene rubber. By referring to this SBR as having a low molecular weight is meant that the SBR will generally have a molecular weight (Mw) that is lower than the SBRs (i) and (ii). Since the low molecular weight SBR will generally be liquid at room temperature, it should be considered to constitute a liquid plasticizer rather than be included in the previously discussed "elastomer component." According to the first-third embodiments, the Tg of the low molecular weight SBR may vary, but in certain preferred embodiments the Tg is about -30 to about -10 °C or -30 to -10 ° C (*e.g.,* -30, -28, -26, -25, -24, -22, -20, -18, -16, -15, -14, -12, or -10 °C), even more preferably about -20 to about -10 °C or -20 to -10 °C (*e.g.,* -20, -19, -18, -17, -16, -15, -14, -13, - 12, -11, or-10 °C). According to the first-third embodiments, the Mw of the low molecular weight SBR may vary, but in certain preferred embodiments the Mw is less than 200,000 grams/mole (*e.g.,* 200,000; 190,000; 180,000; 170,000; 160,000; 150,000; 140,000; 130,000; 120,000; 110,000; 100,000; 90,000; 80,000; 70,000; 60,000; 50,000; 40,000 grams/mole or lower) or 200,000 to 40,000 grams/mole. In certain embodiments of the first-third embodiments, the Mw of the low molecular weight SBR is 150,000 to 40,000 grams/mole (e.g., 150,000; 140,000; 130,000; 120,000; 110,000; 100,000; 90,000; 80,000; 70,000; 60,000; 50,000; or 40,000 grams/mole) or 120,000 to 50,000 grams/mole (*e.g*., 120,000; 110,000; 100,000; 90,000; 80,000; 70,000; 60,000; or 50,000 grams/mole). In certain embodiments of the first-third embodiments, the Mw/Mn of the low molecular weight SBR is less than 1.2 (*e.g.,* 1.2, 1.15, 1.1, 1.05, 1,0, 0.95, 0.90, 0.85, 0.80, etc.), preferably less than 1.1 (*e.g.,* 1.1, 1.05, 1,0, 0.95, 0.90, 0.85, 0.80, etc.); in certain such embodiments, the Mw/Mn may be less than 1.2 to 0.9 (*e.g.,* 1.2, 1.15, 1.1, 1.05, 1,0, 0.95 or 0.90) or less than 1.1 to 0.9 (*e.g.,* 1.1, 1.05, 1,0, 0.95 or 0.90).

According to the first-third embodiments, the low molecular weight SBR may be added to the tire tread rubber composition as free liquid plasticizer, as an extender plasticizer for one of the SBRs (i) or (ii) or for another rubber, or as a combination of both. In preferred embodiments of the first-third embodiments, the low molecular weight SBR is used to extend one of the SBRs (i) or (ii), more preferably the SBR (ii). In certain embodiments of the first-third embodiments, the low molecular weight SBR is used to extend a portion of the SBR (ii). In other words, in such embodiments, a portion of the SBR (ii) is extended with low molecular weight SBR and the remaining portion of the SBR (ii) is not extended with any low molecular weight SBR. In certain such embodiments, about 40 to about 70% by weight or 40 to 70% by weight (*e.g*., 40, 45, 50, 55, 60, 65, or 70% by weight) of the SBR (ii) is extended with low molecular weight SBR, preferably about 50 to about 65% by weight or 50 to 65% by weight (*e.g*., 50, 52, 54, 55, 56, 58, 60, 62, 64, or 65% by weight) of the SBR (ii) is extended with low molecular weight SBR.

According to the first-third embodiments, the amount of the low molecular weight SBR that is used to extend the SBR (i) and/or SBR (ii), preferably the SBR (ii), may vary. In certain embodiments of the first-third embodiments, the amount of the low molecular SBR present in the SBR (i) or SBR (ii), preferably the SBR (ii) is 10-50 parts low molecular weight SBR per 100 parts of rubber (*e.g*., 10, 15, 20, 25, 30, 35, 40, 45 or 50 parts low molecular weight SBR per 100 parts of rubber), preferably 10-40 parts low molecular weight SBR (*e.g*., per 100 parts of rubber or 20-40 parts (*e.g*., 20, 22, 24, 25, 26, 28, 30, 32, 34, 35, 36, 38, or 40 parts) low molecular weight SBR per 100 parts of rubber.

According to the first-third embodiments, the low molecular weight SBR may be prepared by either solution polymerization or by emulsion polymerization. In preferred embodiments of the first-third embodiments, the only low molecular weight SBR is prepared by solution polymerization. In other embodiments of the first-third embodiments, the only low molecular weight SBR is prepared by emulsion polymerization. In certain embodiments of the first-third embodiments, only one low molecular weight SBR is used and in other embodiments more than one (*e.g*., two or three) low molecular weight SBRs are used. Preferably according to the first-third embodiments, only one low molecular weight SBR is used. In certain embodiments of the first-third embodiments, when more than one low molecular weight SBR is used, the rubbers are a combination of solution polymerized SBR and emulsion polymerized SBR (*e.g*., one solution SBR and one emulsion SBR). In certain preferred embodiments of the first-third embodiments, the only low molecular weight SBR present in the tire tread rubber composition is a solution SBR (*i.e*., no emulsion SBR is present).

### Other (Additional) Rubbers

In certain embodiments of the first-third embodiments, the elastomer component of the tire tread rubber composition includes at least one additional rubber. In certain such embodiments, only one additional rubber is present and in other embodiments two (or more) additional rubbers are present. In those embodiments of the first-third embodiments when at least one additional rubber is present, the rubber is preferably selected from conjugated-diene monomer containing polymers and copolymers. In certain preferred embodiments of the first-third embodiments, the SBRs (i) and (ii) are present in a total amount of at least 90% by weight of the elastomer component (*e.g*., 90%, 91%, 92%, 93%, 94%, 95%, 96%, 97%, 98%, 99% or more), preferably at least 95% by weight of the elastomer component (e.g, 95%, 96%, 97%, 98%, 99% or more) or 100% by weight of the elastomer component. It should be understood that when the SBRs (i) and (ii) are present in one of the foregoing amounts (*e.g*., at least 90% by weight), then the additional rubber(s) will be present in a corresponding total amount to constitute 100 parts overall of the elastomer component (*e.g*., 90 parts SBR (i) + (ii) and 10 parts of additional rubber). In those embodiments of the first-third embodiments wherein at least one additional rubber is present, the at least one additional rubber comprises at least one of an additional SBR (*i.e*., other than the SBRs (i) and (ii) and the low molecular weight SBR), natural rubber, polyisoprene, or polybutadiene (preferably polybutadiene having a cis-bond content of at least 90%, more preferably at least 92%), preferably natural rubber or polybutadiene having a cis-bond content of at least 90% (preferably at least 92%). In certain embodiments, the additional rubber(s) are selected from the group consisting of styrene-isoprene rubber, butadiene-isoprene rubber, styrene-isoprene-butadiene rubber, butyl rubber (both halogenated and non-halogenated), ethylene-propylene rubber (EPR), ethylene-butylene rubber (EBR), ethylene-propylene-diene rubber (EPDM), and combinations thereof.

### Filler Component

As discussed above, according to the first-third embodiments, the tire tread rubber composition comprises (includes) at least one reinforcing silica filler and no more than 10 phr of carbon black filler. Collectively, these fillers can be considered to constitute a "filler component" of the tire tread rubber composition. According to the first-third embodiments, the filler component includes at least one reinforcing silica filler in an amount of 60-90 phr (*e.g.,* 60, 62, 64, 65, 66, 68, 70, 72, 74, 75, 76, 78, 80, 82, 84, 85, 86, 88 or 90 phr) and no more than 10 phr (*e.g.,* 10, 9, 8, 7, 6, 5, 4, 3, 2, 1 or 0 phr) of carbon black. As discussed further below, the at least one reinforcing silica filler preferable has a BET surface area of about 200 to about 350 m²/g. In certain preferred embodiments of the first-third embodiments, the filler component consists of (only) at least one reinforcing silica filler in an amount of 60-90 phr and no more than 10 phr of carbon black. In other embodiments of the first-third embodiments, the filler component includes the at least one reinforcing silica filler in an amount of 60-90 phr and no more than 10 phr of carbon black (which is preferably a reinforcing carbon black), as discussed above, but may also include other additional fillers. Such additional fillers may be selected from silica fillers having a BET surface area of less than 200 m²/g, silica fillers having a BET surface area of greater than 360 m²/g, non-reinforcing carbon black, or other fillers suitable for use in tire tread rubber compositions. In those embodiments of the first-third embodiments wherein one or more additional fillers is present in the filler component, the amount of such fillers is preferably no more than 20% by weight (*e.g*., 20%, 19%, 18%, 17%, 16%, 15%, 14%, 13%, 12%, 11%, 10%, 9%, 8%, 7%, 6%, 5%, 4%, 3%, 2%, 1% or less) of the overall filler component, more preferably no more than 10% by weight (*e.g*., 10%, 9%, 8%, 7%, 6%, 5%, 4%, 3%, 2%, 1% or less) of the overall filler component, and even more preferably no more than 5% by weight (*e.g*., 5%, 4%, 3%, 2%, 1% or less) of the overall filler component.

### Reinforcing Silica Filler

As mentioned above, according to the first-third embodiments disclosed herein, the tire tread rubber composition comprises (includes) at least one reinforcing silica filler in an amount of 60 to 90 phr (*e.g.,* 60, 62, 64, 65, 66, 68, 70, 72, 74, 75, 76, 78, 80, 82, 84, 85, 86, 88, or 90 phr). The at least one silica filler used for (b) preferably has a BET surface area of about 200 to about 350 m²/g, 200 to 350 m²/g (*e.g.,* 200, 210, 220, 230, 240, 250, 260, 270, 280, 290, 300, 310, 320, 330, 340, or 350 m²/g), more preferably about 250 to about 320 m²/g or 250 to 320 m²/g (*e.g.,* 200, 210, 220, 230, 240, 250, 260, 270, 280, 290, 300, 310, 320, 330, 340, or 350 m²/g). In embodiments of the first-third embodiments disclosed herein, the only silica filler present in the tire tread rubber composition has a BET surface area within one of the foregoing ranges. In certain preferred embodiments of the first-third embodiments, the amount of the at least one silica filler (b) is 65 to 85 phr (*e.g*., 65, 66, 67, 68, 69, 70, 71, 72, 73, 74, or 75 phr), preferably 70 to 80 phr (*e.g.,* 70, 71, 72, 73, 74, 75, 76, 77, 78, 79, or 80 phr).

According to the first-third embodiments disclosed herein, one or more than one reinforcing silica filler can be used for (b). In preferred embodiments of the first-third embodiments, one silica filler, preferably having a BET surface area as discussed herein, is used for (b). In other embodiments of the first-third embodiments, two (or more) silica fillers, preferably having a BET surface area as discussed herein, is used for (b).

According to the first-third embodiments, the particular type of silica for the at least one reinforcing silica filler may vary. Non-limiting examples of reinforcing silica fillers suitable for use in certain embodiments of the first-third embodiments include, but are not limited to, precipitated amorphous silica, wet silica (hydrated silicic acid), dry silica (anhydrous silicic acid), fumed silica, calcium silicate and the like. Other suitable reinforcing silica fillers for use in certain embodiments of the first-third embodiments include, but are not limited to, aluminum silicate, magnesium silicate (Mg₂SiO₄, MgSiOs etc.), magnesium calcium silicate (CaMgSiO₄), calcium silicate (Ca₂SiO₄ etc.), aluminum silicate (Al₂SiO₅, Al₄.3SiO₄.5H₂O etc.), aluminum calcium silicate (Al₂O₃.CaO₂SiO₂, etc.), and the like. Among the listed reinforcing silica fillers, precipitated amorphous wet-process, hydrated silica fillers are preferred. Such reinforcing silica fillers are produced by a chemical reaction in water, from which they are precipitated as ultrafine, spherical particles, with primary particles strongly associated into aggregates, which in turn combine less strongly into agglomerates. The surface area, as measured by the BET method, is a preferred measurement for characterizing the reinforcing character of different reinforcing silica fillers. In certain embodiments of the first-third embodiments disclosed herein, the rubber composition comprises reinforcing silica filler having a pH of about 5.5 to about 8, 5.5 to 8 (*e.g.,* 5.5, 5.7, 5.9, 6.1, 6.3, 6.5, 6.7, 6.9, 7.1, 7.3, 7.5, 7.7, 7.9, or 8), about 6 to about 8, 6 to 8 (*e.g*., 6, 6.2, 6.4, 6.6, 6.8, 7, 7.2, 7.4, 7.6, 7.8, or 8), about 6 to about 7.5, 6 to 7.5, about 6.5 to about 8, 6.5 to 8, about 6.5 to about 7.5, 6.5 to 7.5, about 5.5 to about 6.8, or 5.5 to 6.8. Some of the commercially available reinforcing silica fillers which can be used in certain embodiments of the first-third embodiments include, but are not limited to, Hi-Sil^{®} EZ120G, Hi-Sil^{®} EZ120G-D, Hi-Sil^{®} 134G, Hi-Sil^{®}EZ 160G, Hi-Sil^{®}EZ 160G-D, Hi-Sil^{®}190, Hi-Sil^{®}190G-D, Hi-Sil^{®} EZ 200G, Hi-Sil^{®} EZ 200G-D, Hi-Sil^{®} 210, Hi-Sil^{®} 233, Hi-Sil^{®} 243LD, Hi-Sil^{®} 255CG-D, Hi-Sil^{®} 315-D, Hi-Sil^{®} 315G-D, Hi-Sil^{®} HDP 320G and the like, produced by PPG Industries (Pittsburgh, Pa.) As well, a number of useful commercial grades of different reinforcing silica fillers are also available from Evonik Corporation (*e.g*., Ultrasil^{®} 320 GR, Ultrasil^{®} 5000 GR, Ultrasil^{®} 5500 GR, Ultrasil^{®} 7000 GR, Ultrasil^{®} VN2 GR, Ultrasil^{®} VN2, Ultrasil^{®} VN3, Ultrasil^{®} VN3 GR, Ultrasil^{®}7000 GR, Ultrasil^{®} 7005, Ultrasil^{®} 7500 GR, Ultrasil^{®} 7800 GR, Ultrasil^{®} 9500 GR, Ultrasil^{®} 9000 G, Ultrasil^{®} 9100 GR), and Solvay (*e.g*., Zeosil^{®} 1115MP, Zeosil^{®} 1085GR, Zeosil^{®} 1165MP, Zeosil^{®} 1200MP, Zeosil^{®} Premium, Zeosil^{®} 195HR, Zeosil^{®} 195GR, Zeosil^{®} 185GR, Zeosil^{®} 175GR, and Zeosil^{®} 165 GR).

### Silica Coupling Agent

In certain embodiments of the first-third embodiments disclosed herein, one or more than one silica coupling agent may also (optionally) be utilized. In preferred embodiments of the first-third embodiments, at least one silica coupling agent is utilized. Silica coupling agents are useful in preventing or reducing aggregation of the silica filler in rubber compositions. Aggregates of the silica filler particles are believed to increase the viscosity of a rubber composition, and, therefore, preventing this aggregation reduces the viscosity and improves the processability and blending of the rubber composition.

Generally, any conventional type of silica coupling agent can be used, such as those having a silane and a constituent component or moiety that can react with a polymer, particularly a vulcanizable polymer. The silica coupling agent acts as a connecting bridge between silica and the polymer. Suitable silica coupling agents for use in certain embodiments of the first-third embodiments disclosed herein include those containing groups such as alkyl alkoxy, mercapto, blocked mercapto, sulfide-containing (*e.g*., monosulfide-based alkoxy-containing, disulfide-based alkoxy-containing, tetrasulfide-based alkoxy-containing), amino, vinyl, epoxy, and combinations thereof. In preferred embodiments of the first-third embodiments, the tire tread rubber composition includes a mercapto type silica coupling agent, most preferably as the only type of silica coupling agent. In certain embodiments of the first-third embodiments, the silica coupling agent can be added to the rubber composition in the form of a pre-treated silica; a pre-treated silica has been pre-surface treated with a silane prior to being added to the rubber composition. The use of a pre-treated silica can allow for two ingredients (*i.e*., silica and a silica coupling agent) to be added in one ingredient, which generally tends to make rubber compounding easier.

Alkyl alkoxysilanes have the general formula R¹⁰ₚSi(OR¹¹)₄₋ₚ where each R¹¹ is independently a monovalent organic group, and p is an integer from 1 to 3, with the proviso that at least one R¹⁰ is an alkyl group. Preferably p is 1. Generally, each R¹⁰ independently comprises C₁ to C₂₀ aliphatic, C₅ to C₂₀ cycloaliphatic, or C₆ to C₂₀ aromatic; and each R¹¹ independently comprises C₁ to C₆ aliphatic. In certain exemplary embodiments, each R¹⁰ independently comprises C₆ to C₁₅ aliphatic and in additional embodiments each R¹⁰ independently comprises C₈ to C₁₄ aliphatic. Mercapto silanes have the general formula HS-R¹³-Si(R¹⁴)(R¹⁵)₂ where R¹³ is a divalent organic group, R¹⁴ is a halogen atom or an alkoxy group, each R¹⁵ is independently a halogen, an alkoxy group or a monovalent organic group. The halogen is chlorine, bromine, fluorine, or iodine. The alkoxy group preferably has 1-3 carbon atoms. Blocked mercapto silanes have the general formula B-S-R¹⁶-Si-X₃ with an available silyl group for reaction with silica in a silica-silane reaction and a blocking group B that replaces the mercapto hydrogen atom to block the reaction of the sulfur atom with the polymer. In the foregoing general formula, B is a block group which can be in the form of an unsaturated heteroatom or carbon bound directly to sulfur via a single bond; R¹⁶ is C₁ to C₆ linear or branched alkylidene and each X is independently selected from the group consisting of C₁ to C₄ alkyl or C₁ to C₄ alkoxy.

Non-limiting examples of alkyl alkoxysilanes suitable for use in certain embodiments of the first-third embodiments include, but are not limited to, octyltriethoxysilane, octyltrimethoxysilane, trimethylethoxysilane, cyclohexyltriethoxysilane, isobutyltriethoxy-silane, ethyltrimethoxysilane, cyclohexyl-tributoxysilane, dimethyldiethoxysilane, methyltriethoxysilane, propyltriethoxysilane, hexyltriethoxysilane, heptyltriethoxysilane, nonyltriethoxysilane, decyltriethoxysilane, dodecyltriethoxysilane, tetradecyltriethoxysilane, octadecyltriethoxysilane, methyloctyldiethoxysilane, dimethyldimethoxysilane, methyltrimethoxysilane, propyltrimethoxysilane, hexyltrimethoxysilane, heptyltrimethoxysilane, nonyltrimethoxysilane, decyltrimethoxysilane, dodecyltrimethoxysilane, tetradecyltrimethoxysilane, octadecyl-trimethoxysilane, methyloctyl dimethoxysilane, and mixtures thereof.

Non-limiting examples of bis(trialkoxysilylorgano)polysulfides suitable for use in certain embodiments of the first-third embodiments include bis(trialkoxysilylorgano) disulfides and bis(trialkoxysilylorgano)tetrasulfides. Specific non-limiting examples of bis(trialkoxysilylorgano)disulfides include, but are not limited to, 3,3'-bis(triethoxysilylpropyl) disulfide, 3,3'-bis(trimethoxysilylpropyl)disulfide, 3,3'-bis(tributoxysilylpropyl)disulfide, 3,3'-bis(tri-t-butoxysilylpropyl)disulfide, 3,3'-bis(trihexoxysilylpropyl)disulfide, 2,2'-bis(dimethylmethoxysilylethyl)disulfide, 3,3'- bis(diphenylcyclohexoxysilylpropyl)disulfide, 3,3'-bis(ethyl-di-sec-butoxysilylpropyl)disulfide, 3,3'-bis(propyldiethoxysilylpropyl)disulfide, 12,12'-bis(triisopropoxysilylpropyl)disulfide, 3,3'-bis(dimethoxyphenylsilyl-2-methylpropyl)disulfide, and mixtures thereof. Non-limiting examples of bis(trialkoxysilylorgano)tetrasulfide silica coupling agents suitable for use in certain embodiments of the first-third embodiments include, but are not limited to, bis(3-triethoxysilylpropyl)tetrasulfide, bis(2-triethoxysilylethyl) tetrasufide, bis(3-trimethoxysilylpropyl)tetrasulfide, 3- trimethoxysilylpropyl-N,N-dimethylthiocarbamoyl tetrasulfide, 3-triethoxysilylpropyl-N,N-dimethylthiocarbamoyl tetrasulfide, 2-triethoxysilyl-N,N-dimethylthiocarbamoyl tetrasulfide, 3-trimethoxysilylpropyl-benzothiazole tetrasulfide, 3-triethoxysilylpropylbenzothiazole tetrasulfide, and mixtures thereof. Bis(3-triethoxysilylpropyl)tetrasulfide is sold commercially as Si69^{®} by Evonik Degussa Corporation.

Non-limiting examples of mercapto silanes suitable for use in certain embodiments of the first-third embodiments disclosed herein include, but are not limited to, 1-mercaptomethyltriethoxysilane, 2- mercaptoethyltriethoxysilane, 3-mercaptopropyltriethoxysilane, 3- mercaptopropylmethyldiethoxysilane, 2-mercaptoethyltripropoxysilane, 18- mercaptooctadecyldiethoxychlorosilane, and mixtures thereof.

Non-limiting examples of blocked mercapto silanes suitable for use in certain embodiments of the first-third embodiments disclosed herein include, but are not limited to, those described in U.S. Pat. Nos. 6,127,468; 6,204,339; 6,528,673; 6,635,700; 6,649,684; and 6,683,135. Representative examples of the blocked mercapto silanes include, but are not limited to, 2- triethoxysilyl-1-ethylthioacetate; 2-trimethoxysilyl-1-ethylthioacetate; 2-(methyldimethoxysilyl)- 1-ethylthioacetate; 3-trimethoxysilyl-1-propylthioacetate; triethoxysilylmethyl-thioacetate; trimethoxysilylmethylthioacetate; triisopropoxysilylmethylthioacetate; methyldiethoxysilylmethylthioacetate; methyldimethoxysilylmethylthioacetate; methyldiisopropoxysilylmethylthioacetate; dimethylethoxysilylmethylthioacetate; dimethylmethoxysilylmethylthioacetate; dimethylisopropoxysilylmethylthioacetate; 2-triisopropoxysilyl-1-ethylthioacetate; 2-(methyldiethoxysilyl)-1-ethylthioacetate, 2-(methyldiisopropoxysilyl)-1- ethylthioacetate; 2-(dimethylethoxysilyl-1-ethylthioacetate; 2-(dimethylmethoxysilyl)-1- ethylthioacetate; 2-(dimethylisopropoxysilyl)-1-ethylthioacetate; 3-triethoxysilyl-1-propylthioacetate; 3-triisopropoxysilyl-1-propylthioacetate; 3-methyldiethoxysilyl-1-propyl-thioacetate; 3-methyldimethoxysilyl-1-propylthioacetate; 3-methyldiisopropoxysilyl-1-propylthioacetate; 1- (2-triethoxysilyl-1-ethyl)-4-thioacetylcyclohexane; 1-(2-triethoxysilyl-1-ethyl)-3- thioacetylcyclohexane; 2-triethoxysilyl-5-thioacetylnorbornene; 2-triethoxysilyl-4-thioacetylnorbornene; 2-(2-triethoxysilyl-1-ethyl)-5-thioacetylnorbornene; 2-(2-triethoxy-silyl-1- ethyl)-4-thioacetylnorbornene; 1-(1-oxo-2-thia-5-triethoxysilylphenyl)benzoic acid; 6- triethoxysilyl-1-hexylthioacetate; 1-triethoxysilyl-5-hexylthioacetate; 8-triethoxysilyl-1- octylthioacetate; 1-triethoxysilyl-7-octylthioacetate; 6-triethoxysilyl-1-hexylthioacetate; 1- triethoxysilyl-5-octylthioacetate; 8-trimethoxysilyl-1-octylthioacetate; 1-trimethoxysilyl-7- octylthioacetate; 10-triethoxysilyl-1-decylthioacetate; 1-triethoxysilyl-9-decylthioacetate; 1- triethoxysilyl-2-butylthioacetate; 1-triethoxysilyl-3-butylthioacetate; 1-triethoxysilyl-3-methyl-2- butylthioacetate; 1-triethoxysilyl-3-methyl-3-butylthioacetate; 3-trimethoxysilyl-1- propylthiooctanoate; 3-triethoxysilyl-1-propyl-1-propylthiopalmitate; 3-triethoxysilyl-1- propylthiooctanoate; 3-triethoxysilyl-1-propylthiobenzoate; 3-triethoxysilyl-1-propylthio-2- ethylhexanoate; 3-methyldiacetoxysilyl-1-propylthioacetate; 3-triacetoxysilyl-1- propylthioacetate; 2-methyldiacetoxysilyl-1-ethylthioacetate; 2-triacetoxysilyl-1- ethylthioacetate; 1-methyldiacetoxysilyl-1-ethylthioacetate; 1-triacetoxysilyl-1-ethyl-thioacetate; tris-(3-triethoxysilyl-1-propyl)trithiophosphate; bis-(3-triethoxysilyl-1- propyl)methyldithiophosphonate; bis-(3-triethoxysilyl-1-propyl)ethyldithiophosphonate; 3- triethoxysilyl-1-propyldimethylthiophosphinate; 3-triethoxysilyl-1-propyldiethylthiophosphinate; tris-(3-triethoxysilyl-1-propyl)tetrathiophosphate; bis-(3-triethoxysilyl-1 propyl)methyltrithiophosphonate; bis-(3-triethoxysilyl-1-propyl)ethyltrithiophosphonate; 3-triethoxysilyl-1-propyldimethyldithiophosphinate; 3-triethoxysilyl-1-propyldiethyldithiophosphinate; tris-(3-methyldimethoxysilyl-1-propyl)trithiophosphate; bis-(3-methyldimethoxysilyl- 1-propyl)methyldithiophosphonate; bis-(3-methyldimethoxysilyl-1-propyl)-ethyldithiophosphonate; 3-methyldimethoxysilyl-1-propyldimethylthiophosphinate; 3-methyldimethoxysilyl-1-propyldiethylthiophosphinate; 3-triethoxysilyl-1-propylmethylthiosulfate; 3-triethoxysilyl-1-propylmethanethiosulfonate; 3-triethoxysilyl-1-propylethanethiosulfonate; 3-triethoxysilyl-1-propylbenzenethiosulfonate; 3-triethoxysilyl-1-propyltoluenethiosulfonate; 3-triethoxysilyl-1-propylnaphthalenethiosulfonate; 3-triethoxysilyl-1-propylxylenethiosulfonate; triethoxysilylmethylmethylthiosulfate; triethoxysilylmethylmethanethiosulfonate; triethoxysilylmethylethanethiosulfonate; triethoxysilylmethylbenzenethiosulfonate; triethoxysilylmethyltoluenethiosulfonate; triethoxysilylmethylnaphthalenethiosulfonate; triethoxysilylmethylxylenethiosulfonate, and the like. Mixtures of various blocked mercapto silanes can be used. A further example of a suitable blocked mercapto silane for use in certain exemplary embodiments is NXT^{™} silane (3-octanoylthio-1-propyltriethoxysilane), commercially available from Momentive Performance Materials Inc. of Albany, NY.

Non-limiting examples of pre-treated silicas (*i.e*., silicas that have been pre-surface treated with a silane) suitable for use in certain embodiments of the first-third embodiments disclosed herein include, but are not limited to, Ciptane^{®} 255 LD and Ciptane^{®} LP (PPG Industries) silicas that have been pre-treated with a mercaptosilane, and Coupsil^{®} 8113 (Degussa) that is the product of the reaction between organosilane bis(triethoxysilylpropyl) polysulfide (Si69) and Ultrasil^{®} VN3 silica. Coupsil 6508, Agilon 400^{™} silica from PPG Industries, Agilon 454^{®} silica from PPG Industries, and 458^{®} silica from PPG Industries. In those embodiments where the silica comprises a pre-treated silica, the pre-treated silica is used in an amount as previously disclosed for the silica filler (*i.e*., 81-120 phr or about 90 to about 120 phr, etc.).

When a silica coupling agent is utilized in an embodiment of the first-third embodiments, the amount used may vary. In certain embodiments of the first-third embodiments, the rubber compositions do not contain any silica coupling agent. In other preferred embodiments of the first-third embodiments, the silica coupling agent is present in an amount sufficient to provide a ratio of the total amount of silica coupling agent to silica filler of about 0.1:100 to about 1:5 (*i.e*., about 0.1 to about 20 parts by weight per 100 parts of silica), including 0.1:100 to 1:5, about 1:100 to about 1:10, 1:100 to 1:10, about 1:100 to about 1:20, 1:100 to 1:20, about 1:100 to about 1:25, and 1:100 to 1:25 as well as about 1:100 to about 0:100 and 1:100 to 0:100. In preferred embodiments of the first-third embodiments, the ratio of the total amount of silica coupling agent to silica filler falls within a ratio of 1:10 to 1:20 (*i.e.,* 10 to 5 parts by weight per 100 parts of silica). In certain embodiments according to the first-third embodiments, the rubber composition comprises about 0.1 to about 15 phr silica coupling agent, including 0.1 to 15 phr (*e.g*., 0.1, 0.5, 1, 2, 3, 4, 5, 6, 7, 8, 9, 10, 11, 12, 13, 14, or 15 phr), about 0.1 to about 12 phr, 0.1 to 12 phr, about 0.1 to about 10 phr, 0.1 to 10 phr, about 0.1 to about 7 phr, 0.1 to 7 phr, about 0.1 to about 5 phr, 0.1 to 5 phr, about 0.1 to about 3 phr, 0.1 to 3 phr, about 1 to about 15 phr, 1 to 15 phr (*e.g*., 1, 2, 3, 4, 5, 6, 7, 8, 9, 10, 11, 12, 13, 14, or 15 phr), about 1 to about 12 phr, 1 to 12 phr (*e.g*., 1, 2, 3, 4, 5, 6, 7, 8, 9, 10, 11, or 12 phr), about 1 to about 10 phr, 1 to 10 phr (*e.g*., 1,1.5, 2, 2.5, 3, 3.5, 4, 4.5, 5, 5.5, 6, 6.5, 7, 7.5, 8, 8.5, 9, 9.5, or 10 phr), about 1 to about 7 phr, 1 to 7 phr, about 1 to about 5 phr, 1 to 5 phr, about 1 to about 3 phr, 1 to 3 phr, about 3 to about 15 phr, 3 to 15 phr, about 3 to about 12 phr, 3 to 12 phr, about 3 to about 10 phr, 3 to 10 phr, about 3 to about 7 phr, 3 to 7 phr, about 3 to about 5 phr, 3 to 5 phr, about 5 to about 15 phr, 5 to 15 phr, about 5 to about 12 phr, 5 to 12 phr, about 5 to about 10 phr, 5 to 10 phr, about 5 to about 7 phr, or 5 to 7 phr. In preferred embodiments of the first-third embodiments, the rubber composition comprises silica coupling agent in an amount of 8 to 12 phr or one of the foregoing ranges falling within this range.

### Carbon Black Filler

As discussed above, according to the first-third embodiments, the tire tread rubber composition includes a limited amount of carbon black filler, more specifically no more than 10 phr (*e.g*., 10, 9, 8, 7, 6, 5, 4, 3, 2, 1 or 0 phr) of carbon black filler. In certain embodiments of the first-third embodiments, the tire tread rubber composition includes no more than 5 phr (*e.g*., 5, 4, 3, 2, 1 or 0 phr) of carbon black filler. In preferred embodiments of the first-third embodiments, carbon black filler is present in an amount of 1-10 phr (*e.g*., 1, 2, 3, 4, 5, 6, 7, 8, 9, or 10 phr) or 1-5 phr (*e.g*., 1, 2, 3, 4, or 5 phr) or an amount within one of the foregoing ranges.

In certain embodiments of the first-third embodiments, the foregoing limited amounts of carbon black filler should be understood to refer to reinforcing carbon black filler (in other words, no more than 10 phr, no more than 5 phr or 1-10 or 1-5 phr of reinforcing carbon black filler is used). In other embodiments of the first-third embodiments, the foregoing limited amounts of carbon black filler should be understood to refer to non-reinforcing carbon black filler (in other words, no more than 10 phr, no more than 5 phr or 1-10 or 1-5 phr of non-reinforcing carbon black filler). In yet other embodiments of the first-third embodiments, the foregoing limited amounts of carbon black filler should be understood to refer to the total amount of all carbon black fillers (*i.e*., both reinforcing and non-reinforcing carbon black filler). In preferred embodiments of the first-third embodiments, the only carbon black filler utilized is a reinforcing carbon black filler.

According to the first-third second embodiments, the particular type or types of carbon black utilized may vary. Generally, suitable carbon blacks for use as a reinforcing filler in the rubber composition of certain embodiments of the first-third embodiments include any of the commonly available, commercially-produced carbon blacks, including those having a surface area of at least about 20 m²/g (including at least 20 m²/g) and, more preferably, at least about 35 m²/g up to about 200 m²/g or higher (including 35 m²/g up to 200 m²/g). Surface area values used herein for carbon blacks are determined by ASTM D-1765 using the cetyltrimethylammonium bromide (CTAB) technique. Among the useful carbon blacks are furnace black, channel blacks, and lamp blacks. More specifically, examples of useful carbon blacks include super abrasion furnace (SAF) blacks, high abrasion furnace (HAF) blacks, fast extrusion furnace (FEF) blacks, fine furnace (FF) blacks, intermediate super abrasion furnace (ISAF) blacks, semi-reinforcing furnace (SRF) blacks, medium processing channel blacks, hard processing channel blacks and conducting channel blacks. Other carbon blacks which can be utilized include acetylene blacks. In certain embodiments of the first-third embodiments, the tire tread rubber composition includes a mixture of two or more of the foregoing blacks. Preferably according to the first-third embodiments, if a carbon black filler is present it consists of only one type (or grade) of reinforcing carbon black. Typical suitable carbon blacks for use in certain embodiments of the first-third embodiments are N-110, N-220, N-339, N-330, N-351, N-550, and N-660, as designated by ASTM D-1765-82a. The carbon blacks utilized can be in pelletized form or an unpelletized flocculent mass. Preferably, for more uniform mixing, unpelletized carbon black is preferred.

### Other Reinforcing Fillers

In certain embodiments of the first-third embodiments, the tire tread rubber composition comprises a reinforcing filler other than carbon black or silica (*i.e*., an additional reinforcing filler). While one or more than one additional reinforcing filler may be utilized, their total amount is preferably limited to no more than 10 phr (*e.g*., 10, 9, 8, 7, 6, 5, 4, 3, 2, 1 or 0 phr), or no more than 5 phr (*e.g*., 5, 4, 3, 2, 1, or 0 phr). In certain preferred embodiments of the first-third embodiments, the tire tread rubber composition contains no additional reinforcing filler (*i.e*., 0 phr); in other words, in such embodiments no reinforcing filler other than silica and optionally carbon black are present.

In those embodiments of the first-third embodiments wherein an additional reinforcing filler is utilized, the additional reinforcing filler or fillers may vary. Non-limiting examples of suitable additional reinforcing fillers for use in the tire tread rubber compositions of certain embodiments of the first-third embodiments include, but are not limited to, alumina, aluminum hydroxide, clay (reinforcing grades), magnesium hydroxide, boron nitride, aluminum nitride, titanium dioxide, reinforcing zinc oxide, and combinations thereof.

### Non-Reinforcing Fillers

In certain embodiments of the first-third embodiments, the tire tread rubber composition for the tread further comprises at least one non-reinforcing filler which is a non-carbon black non-reinforcing filler. In other preferred embodiments of the first-third embodiments, the tire tread rubber composition contains no non-carbon black non-reinforcing fillers (*i.e*., 0 phr). In yet other embodiments of the first-third embodiments, the tire tread rubber composition contains no non-reinforcing fillers (in such embodiments, the carbon black filler of the filler component will be a reinforcing carbon black filler). In embodiments of the first-third embodiments wherein at least one non-carbon black non-reinforcing filler is utilized, the at least one non-reinforcing filler may be selected from clay (non-reinforcing grades), graphite, magnesium dioxide, aluminum oxide, starch, boron nitride (non-reinforcing grades), silicon nitride, aluminum nitride (non-reinforcing grades), calcium silicate, silicon carbide, ground rubber, and combinations thereof. The term "non-reinforcing filler" is used to refer to a particulate material that has a nitrogen absorption specific surface area (N₂SA) of less than about 20 m²/g (including less than 20 m²/g), and in certain embodiments less than about 10 m²/g (including less than 10 m²/g). The N₂SA surface area of a particulate material can be determined according to various standard methods including ASTM D6556. In certain embodiments, the term "non-reinforcing filler" is alternatively or additionally used to refer to a particulate material that has a particle size of greater than about 1000 nm (including greater than 1000 nm). In those embodiments of the first-third embodiments, wherein a non-carbon black non-reinforcing filler is present in the tire tread rubber composition, the total amount of non-carbon black non-reinforcing filler may vary but is preferably no more than 20 phr (*e.g.,* 20, 19, 18, 17, 16, 15, 14, 13, 12, 11, 10, 9, 8, 7, 6, 5, 4, 3, 2, or 1 phr), and in certain embodiments 1-10 phr, no more than 10 phr, no more than 5 phr (*e.g*., 5, 4, 3, 2, or 1 phr), 1-5 phr, or no more than 1 phr.

### Hydrocarbon Resin

As mentioned above, according to the first-third embodiments, the tire tread rubber composition comprises (includes) 2-14 phr (*e.g.,* 2, 3, 4, 5, 6, 7, 8, 9, 10, 11, 12, 13, or 14 phr) of at least one hydrocarbon resin having a Tg of about 40 to about 60 °C or 40 to 60 °C (*e.g.,* 40, 42, 44, 45, 46, 48, 50, 52, 54, 56, 58, or 60 °C). Hydrocarbon resin Tg can be determined by DSC, according to the procedure discussed above for elastomer Tg measurements. In certain preferred embodiments of the first-third embodiments, the tire tread rubber composition includes 2-10 phr (*e.g.,* 2, 3, 4, 5, 6, 7, 8, 9, or 10 phr) of at least one hydrocarbon resin having a Tg of about 40 to about 60 °C or 40 to 60 °C (*e.g.,* 40, 42, 44, 45, 46, 48, 50, 52, 54, 55, 56, 58, or 60 °C) . In preferred certain embodiments of the first-third embodiments, the at least one hydrocarbon resin (d) has a Tg of about 45 to about 55 °C, or 45 to 55 °C (*e.g.,* 45, 46, 48, 50, 52, 54, or 55 °C). In certain preferred embodiments of the first-third embodiments, the at least one hydrocarbon resin (d) comprises an aliphatic hydrocarbon resin having a Tg of about 40 to about 60 °C, 40 to 60 °C, about 45 to about 60 °C, 45-60 °C, about 45 to about 55 °C, or 45 to 55 °C. As discussed further *infra* according to the first-third embodiments in addition to controlling the amount of hydrocarbon resin (c) used in the tire tread rubber compositions, it is also preferable to control the total amount of hydrocarbon resin (c) and oil (d) to within the amounts discussed elsewhere herein.

In certain embodiments of the first-third embodiments, the hydrocarbon resin of (d) comprises an aliphatic resin optionally in combination with one or more additional resins selected from cycloaliphatic, aromatic, and terpene resins; in those embodiments of the first-third embodiments wherein one or more additional resins are present, the total amount of such additional resin(s) is preferably no more than 5 phr, less than 5 phr, less than 4 phr, less than 3 phr, less than 2 phr, or less than 1 phr (and in each instance no more than 10% by weight, preferably no more than 5% by weight of the overall amount of hydrocarbon resin of (d)). In other embodiments of the first-third embodiments, the hydrocarbon resin of (d) consists of (only) an aliphatic resin or aliphatic resins. When an aliphatic resin is used, one or more than one aliphatic resin may be utilized. In certain embodiments of the first-third embodiments, the hydrocarbon resin (d) excludes any terpene resin (*i.e*., 0 phr of terpene resin is present in the tire tread rubber composition). As used herein, the term aliphatic resin should be understood to include both aliphatic homopolymer resins and aliphatic copolymer resins. An aliphatic copolymer resins refers to a hydrocarbon resin which comprises a combination of one or more aliphatic monomers in combination with one or more other (non-aliphatic) monomers, with the largest amount of any type of monomer being aliphatic. An aliphatic copolymer resin would include a hydrocarbon resin having 45% by weight aliphatic monomers, in addition to 25% by weight cycloaliphatic monomers and 30% by weight aromatic monomers as well as a hydrocarbon resin having 55% by weight aliphatic monomers, in addition to 30% by weight cycloaliphatic monomers and 15% by weight aromatic monomers. In certain embodiments of the first-third embodiments, the hydrocarbon resin of (d) comprises one or more aliphatic copolymer resins having a majority by weight of all monomers being aliphatic (*e.g*., 51%, 55%, 60%, 65%, etc.). Non-limiting examples of aliphatic resins suitable for use as the hydrocarbon resin in certain embodiments of the first-third embodiments include C5 fraction homopolymer or copolymer resins, C5 fraction/C9 fraction copolymer resins, C5 fraction/vinyl aromatic copolymer resins (*e.g*., C5 fraction/styrene copolymer resin), C5 fraction/cycloaliphatic copolymer resins, C5 fraction/C9 fraction/cycloaliphatic copolymer resins, , and combinations thereof. Non-limiting examples of cycloaliphatic monomers include, but are not limited to cyclopentadiene ("CPD") and dicyclopentadiene ("DCPD"). Exemplary aliphatic resins are commercially available from various companies including Chemfax, Dow Chemical Company, Eastman Chemical Company, Idemitsu, Neville Chemical Company, Nippon, Polysat Inc., Resinall Corp., and Zeon under various trade names.

In certain embodiments of the first-third embodiments, the hydrocarbon resin of (d) comprises a C5 fraction homopolymer resin, C5 fraction copolymer resin (*e.g*., C5 in combination with one or more of the above-mentioned monomers such as C9 fraction, DCPD, CPD, and combinations thereof), or a combination thereof. In other embodiments of the first-third embodiments, the hydrocarbon resin of (c) consists of (only) a C5 fraction homopolymer resin, C5 faction copolymer resin (*e.g*., C5 in combination with one or more of the above-mentioned monomers such as C9 fraction, DCPD, CPD, and combinations thereof), or a combination thereof.

### Liquid Plasticizer

As discussed above, according to the first-third embodiments disclosed herein, the tire tread rubber composition includes as (e) 15 to 35 phr (*e.g*., 15, 16, 18, 19, 20, 22, 24, 25, 26, 28, 30, 32, 34, or 35 phr) of liquid plasticizer, wherein at least a portion of the liquid plasticizer is provided by a low molecular weight styrene-butadiene rubber (as discussed above). In certain embodiments of the first-third embodiments, the amount of liquid plasticizer (e) is 15 to 30 phr (*e.g.,* 15, 16, 17, 18, 19, 20, 21, 22, 23, 24, 25, 26, 27, 28, 29, or 30 phr) or 15 to 25 phr (*e.g*., 15, 16, 17, 18, 19, 20, 21, 22, 23, 24, or 25 phr), wherein at least a portion of the liquid plasticizer is provided by a low molecular weight SBR (as discussed above). The phrase liquid plasticizer should be understood to refer to plasticizers that are liquid at 25 °C, including, but not limited, to oils and ester plasticizers. In certain embodiments of the first-third embodiments, at least a portion of the liquid plasticizer (e) is provided by an oil used to extend the SBR (i) and/or the SBR (ii), preferably the SBR (ii). In certain embodiments of the first-third embodiments, the entire amount of the liquid plasticizer (e) is provided by a combination of low molecular weight SBR and an oil used to extend the SBR (i) and/or the SBR (ii), preferably the SBR (ii). In certain embodiments of the first-third embodiments, the liquid plasticizer (e) is provided by a combination of the low molecular weight SBR (as discussed above), oil used to extend the SBR (i) and/or the SBR (ii), preferably the SBR (ii), and free liquid plasticizer. By the phrase free liquid plasticizer is meant liquid plasticizer that is added along with other ingredients of the rubber composition (*e.g*., SBRs (i) and (ii) and filler ingredients) separately to the mixing apparatus used to prepare the rubber composition rather than being added via pre-mixture or extension of one of the SBRs or other polymers used in the elastomer component. In certain embodiments of the first-third embodiments, about 10% to about 60% by weight or 10% to 60% by weight (*e.g*., 10%, 12%, 14%, 15%, 16%, 18%, 20%, 22%, 24%, 25%, 26%, 28%, 30%, 32%, 34%, 35%, 36%, 38%, 40%, 42%, 44%, 45%, 46%, 48%, 50%, 52%, 54%, 55%, 56%, 58% or 60%) of the liquid plasticizer (e) is provided by the low molecular weight SBR (as discussed above), preferably about 25% to about 50% or 25% to 50% by weight (*e.g*., 25%, 30%, 35%, 40%, 45%, or 50%). In certain embodiments of the first-third embodiments, about 10% to about 50% by weight or 10% to 50% by weight (*e.g*., 10%, 12%, 14%, 15%, 16%, 18%, 20%, 22%, 24%, 25%, 26%, 28%, 30%, 32%, 34%, 35%, 36%, 38%, 40%, 42%, 44%, 45%, 46%, 48%, 50%) of the liquid plasticizer (e) is provided by an oil used to extend the SBR (i) and/or the SBR (ii), preferably the SBR (ii), preferably about 15% to about 30% by weight (*e.g*., 15%, 20%, 25%, or 30%). In certain embodiments of the first-third embodiments, about 10% to about 50% by weight or 10% to 50% by weight (*e.g*., 10%, 12%, 14%, 15%, 16%, 18%, 20%, 22%, 24%, 25%, 26%, 28%, 30%, 32%, 34%, 35%, 36%, 38%, 40%, 42%, 44%, 45%, 46%, 48%, 50%) of the liquid plasticizer (e) is provided by free liquid plasticizer, preferably about 15% to about 30% by weight (*e.g*., 15%, 20%, 25%, or 30%).

In those embodiments of the first-third embodiments wherein an oil-extended rubber or SBR is used, the amount of oil used to prepare the oil-extended rubber may vary; in certain such embodiments, the amount of extender oil present in the oil-extended rubber (polymer) is 10-50 parts oil per 100 parts of rubber (*e.g*., 10, 15, 20, 25, 30, 35, 40, 45 or 50 parts oil per 100 parts of rubber), preferably 10-40 parts oil per 100 parts of rubber or 20-40 parts oil per 100 parts of rubber.

As used herein, oil refers to both petroleum based oils (*e.g*., aromatic, naphthenic, and low PCA oils) as well as plant oils (such as can be harvested from vegetables, nuts, and seeds). Plant oils will generally comprise triglycerides and the term should be understood to include synthetic triglycerides as well as those actually sourced from a plant.

According to the first-third embodiments, when one or more oils are present in the rubber composition as at least a portion of the liquid plasticizer (e), various types of processing and extender oils may be utilized, including, but not limited to aromatic, naphthenic, and low PCA oils (petroleum-sourced or plant-sourced). Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom. Exemplary petroleum-sourced low PCA oils include mild extraction solvates (MES), treated distillate aromatic extracts (TDAE), TRAE, and heavy naphthenics. Exemplary MES oils are available commercially as CATENEX SNR from SHELL, PROREX 15, and FLEXON 683 from EXXONMOBIL, VIVATEC 200 from BP, PLAXOLENE MS from TOTAL FINA ELF, TUDALEN 4160/4225 from DAHLEKE, MES-H from REPSOL, MES from Z8, and OLIO MES S201 from AGIP. Exemplary TDAE oils are available as TYREX 20 from EXXONMOBIL, VIVATEC 500, VIVATEC 180, and ENERTHENE 1849 from BP, and EXTENSOIL 1996 from REPSOL. Exemplary heavy naphthenic oils are available as SHELLFLEX 794, ERGON BLACK OIL, ERGON H2000, CROSS C2000, CROSS C2400, and SAN JOAQUIN 2000L. Exemplary low PCA oils also include various plant-sourced oils such as can be harvested from vegetables, nuts, and seeds. Non-limiting examples include, but are not limited to, soy or soybean oil, sunflower oil (including high oleic sunflower oil), safflower oil, corn oil, linseed oil, cotton seed oil, rapeseed oil, cashew oil, sesame oil, camellia oil, jojoba oil, hemp oil, macadamia nut oil, coconut oil, and palm oil. The foregoing processing oils can be used as an extender oil, *i.e.,* to prepare an oil-extended polymer or copolymer or as a processing or free oil.

In those embodiments of the first-third embodiments wherein one or more oils are present in the rubber composition as at least a portion of the liquid plasticizer (e), the Tg of the oil or oils used may vary. In certain embodiments of the first-third embodiments, any oil utilized has a Tg of about -40 to about -100 °C, -40 to -100 °C (*e.g.,* -40, -45, -50, -55, -60, -65, - 70, -75, -80, -85, -90, -95, or -100 °C), about -40 to about -90 °C, -40 to -90 °C (*e.g.,* -40, -45, -50, -55, -60, -65, -70, -75, -80, -85, or -90 °C), about -45 to about -85 °C, -45 to -85 °C (*e.g.,* -45, -50, - 55, -60, -65, -70, -75, -80, or -85 °C), about -50 to about -80 °C, or -50 to -80 °C (*e.g.,* -50, -55, -60, -65, -70, -75, or -80 °C).

Preferably according to the first-third embodiments, the tire tread rubber composition contains less than 5 phr (e.g., 4.5, 4, 3, 2, 1, or 0 phr) of MES or TDAE oil, preferably no MES or TDAE oil (*i.e.,* 0 phr). In certain embodiments of the first-third embodiments, the rubber composition contains no petroleum oil (*i.e.,* 0 phr) and instead any oil utilized is a plant oil. In certain embodiments of the first-third embodiments, the tire tread rubber composition contains soybean oil in one of the above-mentioned amounts as either free oil and/or extender oil, preferably as free oil; in certain such embodiments the only oil included is soybean oil as either free oil and/or extender oil, preferably as free oil. In certain embodiments of the first-third embodiments, the tire tread rubber composition contains no sunflower oil (*i.e.,* 0 phr). In other embodiments of the first-third embodiments, the only oil included is sunflower oil as either free oil and/or extender oil, preferably as free oil.

In certain embodiments of the first-third embodiments, the tire tread rubber composition includes one or more ester plasticizers for at least a portion of the liquid plasticizer (e). Ester plasticizers are generally liquid at room temperature. In other embodiments of the first-third embodiments, the liquid plasticizer (e) does not contain any ester plasticizer (*i.e*., 0 phr of ester plasticizer is present). Suitable ester plasticizers are known to those of skill in the art and include, but are not limited to, phosphate esters, phthalate esters, adipate esters and oleate esters (*i.e*., derived from oleic acid). Taking into account that an ester is a chemical compound derived from an acid wherein at least one -OH is replaced with an -O-alkyl group, various alkyl groups may be used in suitable ester plasticizers for use in the tire tread rubber compositions, including generally linear or branched alkyl of C₁ to C₂₀ (*e.g.,* C₁, C₂, C₃, C₄, C₅, C₆, C₇, C₈, C₉, C₁₀, C₁₁, C₁₂, C₁₃, C₁₄, C₁₅, C₁₆, C₁₇, C₁₈, C₁₉, C₂₀), or C₆ to C₁₂. Certain of the foregoing esters are based upon acids which have more than one -OH group and, thus, can accommodate one or more than one O-alkyl group (*e.g*., trialkyl phosphates, dialkyl phthalates, dialkyl adipates). Non-limiting examples of suitable ester plasticizers include trioctyl phosphate, dioctyl phthalate, dioctyl adipate, nonyl oleate, octyl oleate, and combinations thereof. The use of an ester plasticizer such as one or more of the foregoing may be beneficial to the snow or ice performance of a tire made from a tire tread rubber composition containing such ester plasticizer at least in part due to the relatively low Tg of ester plasticizers. In certain embodiments of the first-third embodiments, the tire tread rubber composition includes one or more ester plasticizers having a Tg of -40 °C to -70 °C (*e.g.,* -40, -45, -50, -55, -60, -65, or -70 °C), or -50 °C to -65 °C (*e.g.,* -50, -51, -52, -53, -54, -55, -56, -57, -58, -59, -60, -61, -62, -63, -64, or -65 °C ). In those embodiments of the first-third embodiments wherein one or more ester plasticizers is utilized the amount utilized may vary. In certain embodiments of the first-third embodiments, one or more ester plasticizers are utilized in a total amount of 1-25 phr (*e.g*., 1, 2, 3, 4, 5, 6, 7, 8, 9, 10, 11, 12, 13, 14, 15, 16, 17, 18, 19, 20, 21, 22, 23, 24,or 25 phr), 1-20 phr (*e.g*., 1, 2, 3, 4, 5, 6, 7, 8, 9, 10, 11, 12, 13, 14, 15, 16, 17, 18, 19, or 20 phr), 1-15 phr (*e.g.,* 1, 2, 3, 4, 5, 6, 7, 8, 9, 10, 11, 12, 13, 14, or 15 phr), 1-10, phr (*e.g.,* 1, 2, 3, 4, 5, 6, 7, 8, 9, or 10 phr), 2-6 phr (*e.g.,* 2, 3, 4, 5, or 6 phr) or 2-5 phr (*e.g.,* 2, 3, 4, or 5 phr). In certain embodiments of the first-third embodiments, one or more ester plasticizers are used (in one of the foregoing amounts) in combination with oil where the oil is present in an amount of 1 to less than 10 phr, or 1-5 phr. In other embodiments of the first-third embodiments, one or more ester plasticizers is used without any oil being present in the tire tread rubber composition (*i.e*., 0 phr of oil).

In certain embodiments of the first-third embodiments, the tire tread rubber composition comprises a total amount of plasticizer of 20-49 phr (*e.g.,* 20, 22, 24, 25, 26, 28, 30, 32, 34, 35, 36, 38, 40, 42, 44, 45, 46, 48, or 49 phr), with the plasticizer including the hydrocarbon resin and all of the liquid plasticizer(s), all as discussed above. In certain embodiments of the first-third embodiments, the rubber composition comprises a total amount of plasticizer of no more than 49 phr (*e.g.,* 49, 45, 40, 35, 30, 25, or 20 phr), 20-40 phr (*e.g.,* 20, 22, 24, 25, 26, 28, 30, 32, 34, 35, 36, 38, or 40 phr), preferably no more than 35 phr (*e.g*., 35, 34, 32, 30, 28, 26, 25, 24, 22 or 20 phr) or 25-35 phr (*e.g*., 25, 26, 28, 30, 32, 34, or 35 phr). In certain embodiments of the first-third embodiments, the total amount of plasticizer includes a hydrocarbon resin in a weight ratio of 2/1 to 1/5 with the liquid plasticizer, preferably no more than 1/1 such as 1/1 to 1/4 (*e.g.,* 1/1, 1/1.5, 1/2, 1/2.5, 1/3, 1/3.5, or 1/4) with the liquid plasticizer. As a non-limiting example, if hydrocarbon resin were used in an amount of 8 phr and the total amount of liquid plasticizer were 16 phr, the weight ratio of hydrocarbon resin to liquid plasticizer would be 1/2.

### Cure Package

As discussed above, according to the first-third embodiments disclosed herein, the tire tread rubber composition includes (comprises) a cure package. Although the contents of the cure package may vary according to the first-third embodiments, generally, the cure package includes at least one of: a vulcanizing agent; a vulcanizing accelerator; a vulcanizing activator (*e.g*., zinc oxide, stearic acid, and the like); a vulcanizing inhibitor; and an anti-scorching agent. In certain embodiments of the first-third embodiments, the cure package includes at least one vulcanizing agent, at least one vulcanizing accelerator, at least one vulcanizing activator and optionally a vulcanizing inhibitor and/or an anti-scorching agent. Vulcanizing accelerators and vulcanizing activators act as catalysts for the vulcanization agent. Various vulcanizing inhibitors and anti-scorching agents are known in the art and can be selected by one skilled in the art based on the vulcanizate properties desired.

Examples of suitable types of vulcanizing agents for use in certain embodiments of the first-third embodiments, include but are not limited to, sulfur or peroxide-based curing components. Thus, in certain such embodiments, the cure package includes a sulfur-based curative or a peroxide-based curative. In preferred embodiments of the first-third embodiments, the vulcanizing agent is a sulfur-based curative; in certain such embodiments the vulcanizing agent consists of (only) a sulfur-based curative. Examples of specific suitable sulfur vulcanizing agents include "rubbermaker's" soluble sulfur; sulfur donating curing agents, such as an amine disulfide, polymeric polysulfide, or sulfur olefin adducts; and insoluble polymeric sulfur. Preferably, the sulfur vulcanizing agent is soluble sulfur or a mixture of soluble and insoluble polymeric sulfur. For a general disclosure of suitable vulcanizing agents and other components used in curing, *e.g*., vulcanizing inhibitor and anti-scorching agents, one can refer to Kirk-Othmer, Encyclopedia of Chemical Technology, 3rd ed., Wiley Interscience, N.Y. 1982, Vol. 20, pp. 365 to 468, particularly Vulcanization Agents and Auxiliary Materials, pp. 390 to 402, or Vulcanization by A. Y. Coran, Encyclopedia of Polymer Science and Engineering, Second Edition (1989 John Wiley & Sons, Inc.). Vulcanizing agents can be used alone or in combination. Generally, the vulcanizing agents may be used in certain embodiments of the first-third embodiments in an amount ranging from 0.1 to 10 phr (*e.g*., 0.1, 0.5, 1, 2, 3, 4, 5, 6, 7, 8, 9, or 10 phr), including from 1 to 7.5 phr, including from 1 to 5 phr, and preferably from 1 to 3.5 phr (*e.g*., 1, 1.5, 2, 2.5, 3, or 3.5 phr).

Vulcanizing accelerators are used to control the time and/or temperature required for vulcanization and to improve properties of the vulcanizate. Examples of suitable vulcanizing accelerators for use in certain embodiments of the first-third embodiments disclosed herein include, but are not limited to, thiazole vulcanization accelerators, such as 2-mercaptobenzothiazole, 2,2'-dithiobis(benzothiazole) (MBTS), N-cyclohexyl-2-benzothiazolesulfenamide (CBS), N-tert-butyl-2-benzothiazole-sulfenamide (TBBS), and the like; guanidine vulcanization accelerators, such as diphenyl guanidine (DPG) and the like; thiuram vulcanizing accelerators; carbamate vulcanizing accelerators; and the like. Generally, the amount of the vulcanization accelerator used ranges from 0.1 to 10 phr (*e.g*., 0.1, 0.5, 1, 2, 3, 4, 5, 6, 7, 8, 9, or 10 phr), preferably 1 to 6 phr (*e.g*., 1, 1.5, 2, 2.5, 3, 3.5, 4, 4.5, 5, 5.5 or 6 phr). Preferably, any vulcanization accelerator used in the rubber compositions of the first-third embodiments excludes any thiurams such as thiuram monosulfides and thiuram polysulfides (examples of which include TMTM (tetramethyl thiuram monosulfide), TMTD (tetramethyl thiuram disulfide), DPTT (dipentamethylene thiuram tetrasulfide), TETD (tetraethyl thiuram disulfide), TiBTD (tetraisobutyl thiuram disulfide), and TBzTD (tetrabenzyl thiuram disulfide)); in other words, the rubber compositions of the first-third embodiments preferably contain no thiuram accelerators (*i.e.,* 0 phr).

Vulcanizing activators are additives used to support vulcanization. Generally vulcanizing activators include both an inorganic and organic component. Zinc oxide is the most widely used inorganic vulcanization activator. Various organic vulcanization activators are commonly used including stearic acid, palmitic acid, lauric acid, and zinc salts of each of the foregoing. Generally, in certain embodiments of the first-third embodiments the amount of vulcanization activator used ranges from 0.1 to 6 phr (*e.g*., 0.1, 0.5, 1, 1.5, 2, 2.5, 3, 3.5, 4, 4.5, 5, 5.5, or 6 phr), preferably 0.5 to 4 phr (*e.g*., 0.5, 1, 1.5, 2, 2.5, 3 3.5, or 4 phr). In certain embodiments of the first-third embodiments, both zinc oxide and stearic acid are used as vulcanizing activators with the total amount utilized falling within one of the foregoing ranges; in certain such embodiments, the only vulcanizing activators used are zinc oxide and stearic acid.

Vulcanization inhibitors are used to control the vulcanization process and generally retard or inhibit vulcanization until the desired time and/or temperature is reached. Common vulcanization inhibitors include, but are not limited to, PVI (cyclohexylthiophthalmide) from Santogard. Generally, in certain embodiments of the first-third embodiments the amount of vulcanization inhibitor is 0.01 to 1 phr (*e.g*., 0.01, 0.015, 0.02, 0.025, 0.03, 0.04, 0.05, 0.06, 0.07, 0.08, 0.09, 0.1, 0.2, 0.3, 0.4, 0.5, 0.6, 0.7, 0.8, 0.9, or 1 phr), preferably 0.01 to 0.3 phr (*e.g*., 0.01, 0.015, 0.02, 0.025, or 0.3 phr).

### Other Ingredients

Various other ingredients that may optionally be added to the tire tread rubber compositions of the first-third embodiments as disclosed herein include waxes (which in some instances are antioxidants), processing aids, reinforcing resins, peptizers, and antioxidants/antidegradant. Ingredients which are antidegradants may also be classified as an antiozonant or antioxidant, such as those selected from: N,N'disubstituted-p-phenylenediamines, such as N-1,3-dimethylbutyl-N'phenyl-p-phenylenediamine (6PPD), N,N'-Bis(1,4-dimethylpently)-p-phenylenediamine (77PD), N-phenyl-N-isopropyl-p-phenylenediamine (IPPD), and N-phenyl-N'-(1,3-dimethylbutyl)-p-phenylenediamine (HPPD). Other examples of antidegradants include, acetone diphenylamine condensation product, 2,4-Trimethyl-1,2-dihydroquinoline, Octylated Diphenylamine, 2,6-di-t-butyl-4-methyl phenol and certain waxes. In certain other embodiments of the first-third embodiments, the tire tread rubber composition may be free or essentially free of antidegradants such as antioxidants or antiozonants.

### Preparing The Rubber Compositions

The particular steps involved in preparing the tire tread rubber compositions of the first-third embodiments disclosed herein are generally those of conventionally practiced methods comprising mixing the ingredients in at least one non-productive master-batch stage and a final productive mixing stage. In certain embodiments of the first-third embodiments, the tire tread rubber composition is prepared by combining the ingredients for the rubber composition (as disclosed above) by methods known in the art, such as, for example, by kneading the ingredients together in a Banbury mixer or on a milled roll. Such methods generally include at least one non-productive master-batch mixing stage and a final productive mixing stage. The term non-productive master-batch stage is known to those of skill in the art and generally understood to be a mixing stage (or stages) where no vulcanizing agents or vulcanization accelerators are added. The term final productive mixing stage is also known to those of skill in the art and generally understood to be the mixing stage where the vulcanizing agents and vulcanization accelerators are added into the rubber composition. In certain embodiments of the first-third embodiments, the tire tread rubber composition is prepared by a process comprising more than one non-productive master-batch mixing stage.

In certain preferred embodiments of the first-third embodiments, the tire tread rubber composition is prepared by a process wherein the master-batch mixing stage includes at least one of tandem mixing or intermeshing mixing. Tandem mixing can be understood as including the use of a mixer with two mixing chambers with each chamber having a set of mixing rotors; generally, the two mixing chambers are stacked together with the upper mixer being the primary mixer and the lower mixer accepting a batch from the upper or primary mixer. In certain embodiments, the primary mixer utilizes intermeshing rotors and in other embodiments the primary mixer utilizes tangential rotors. Preferably, the lower mixer utilizes intermeshing rotors. Intermeshing mixing can be understood as including the use of a mixer with intermeshing rotors. Intermeshing rotors refers to a set of rotors where the major diameter of one rotor in a set interacts with the minor diameter of the opposing rotor in the set such that the rotors intermesh with each other. Intermeshing rotors must be driven at an even speed because of the interaction between the rotors. In contrast to intermeshing rotors, tangential rotors refers to a set of rotors where each rotor turns independently of the other in a cavity that may be referred to as a side. Generally, a mixer with tangential rotors will include a ram whereas a ram is not necessary in a mixer with intermeshing rotors.

Generally, the rubbers (or polymers) and at least one reinforcing filler (as well as any silane coupling agent, liquid plasticizing agent and resin) will be added in a non-productive or master-batch mixing stage or stages. Generally, at least the vulcanizing agent component and the vulcanizing accelerator component of a cure package will be added in a final or productive mixing stage.

In certain embodiments of the first-third embodiments, the tire tread rubber composition is prepared using a process wherein at least one non-productive master batch mixing stage is conducted at a temperature of about 130 °C to about 200 °C or 130-200 °C (*e.g.,* 130, 140, 150, 160, 170, 180, 190, or 200 °C), preferably about 130 to about 180 °C or 130-180 °C (130, 140, 150, 160, 170, or 180 °C). In certain embodiments of the first -third embodiments, the tire tread rubber composition is prepared using a final productive mixing stage conducted at a temperature below the vulcanization temperature in order to avoid unwanted pre-cure of the tire tread rubber composition. Therefore, the temperature of the productive or final mixing stage generally should not exceed about 120 °C and is typically about 40 °C to about 120 °C or 40-120 °C (*e.g.,* 40, 50, 60, 70, 80, 90, 100, 110, or 120 °C), or about 60 °C to about 110 °C and, especially, about 75 °C to about 100 °C or 75-100 °C (*e.g.,* 75, 80, 85, 90, 95, or 100 °C). In certain embodiments of the first-third embodiments, the tire tread rubber composition is prepared according to a process that includes at least one non-productive mixing stage and at least one productive mixing stage. The use of silica fillers may optionally necessitate a separate re-mill stage for separate addition of a portion or all of such filler. This stage often is performed at temperatures similar to, although often slightly lower than, those employed in the masterbatch stage, i.e., ramping from about 90°C to a drop temperature of about 150°C.

### Properties Of The Rubber Composition Used For The Tire Tread

As mentioned above, according to the third embodiment disclosed herein, a method is provided for providing a tire with a road-contacting tread which tire has balanced wet performance, rolling resistance and cornering performance, the method comprising utilizing the tire tread rubber composition according to the first embodiment. Generally, according to the first-third embodiments disclosed herein, the tire tread rubber composition (when used as the road-contacting tread of a tire) can be understood as producing a tire which has balanced wet performance, rolling resistance and cornering performance. Additional improved or desirable properties include elongation at break (Eb), tensile at break (Tb) and TbxEb.

Measurements of E' (dynamic storage modulus) at different temperatures can provide an indication of various properties of a rubber composition when it is utilized as a tire tread (*e.g.,* E' at -20 °C correlates to snow traction with a relatively lower E' indicating better snow traction, and E' at 30 °C correlates to stiffness or cornering with a relatively higher E' indicating improved stiffness or cornering). When the rubber composition is incorporated into a tire tread, steering stability including cornering on a dry road surface is generally impacted by E' at higher temperatures (*e.g*., 30 °C) with higher values preferred and snow traction is generally impacted by E' at lower temperatures (*e.g*., -20 °C and -40 °C) with lower values preferred. The measurements and performance referred to herein can be measured upon a slab of cured rubber composition (the rubber composition being as discussed herein for the first-third embodiments) that has been prepared in a laboratory or can be measured upon a sample cut from a tire tread (*e.g*., that contains a cured version of a rubber composition as discussed herein for the first-third embodiments).

Measurements of tan δ at various temperatures can be used to quantify the expected wet performance, dry performance, and rolling resistance of the rubber compositions when they are incorporated into tire treads. Tan δ values can be measured with a dynamic mechanical thermal spectrometer (Eplexor^{®} 500N from Gabo Qualimeter Testanlagen GmbH of Ahiden, Germany) generally following the guidelines of ASTM D5992-96 (2011) under the following conditions: measurement mode: tensile test mode; measuring frequency: 52 Hz; temperature sweep measurement, applying 0.2% strain from -50 to -5 °C and 1% strain from -5 to 65 °C, with the starting temperature being somewhat below -50 °C and the ending temperature being somewhat above -5 °C; collecting data approximately every 1 °C in order to provide measurements at temperatures of -30 °C, 0 °C, 30°C, and 60 °C; sample shape: 4.75 mm wide x 29 mm long x 2.0 mm thick. Measurement is made upon a cured sample of rubber (cured for 15 minutes at 170°C). A rubber composition's tan δ at 0 °C is indicative of its wet traction when incorporated into a tire tread, its tan δ at 30 °C is indicative of its dry performance when incorporated into a tire tread and its tan δ at 60 °C is indicative of its rolling resistance when incorporated into a tire tread.

In certain embodiments of the first-third embodiments, the rubber composition has a value for tan δ at 60 °C of 0.15 to 0.25 (*e.g.,* 0.15, 0.16, 0.17, 0.18, 0.19, 0.2, 0.21, 0.22, 0.23, 0.24, or 0.25), preferably 0.16 to 0.2 (*e.g.,* 0.16, 0.17, 0.18, 0.19, or 0.2). A tan δ at 60 °C within one of the foregoing ranges can be understood as being indicative of a tire (or more specifically, a tire tread) with a low overall rolling resistance. In certain embodiments of the first-third embodiments, the value for tan δ at 60 °C is combined with at least one of the following: (a) a value for tan δ at 0 °C of at least 3.5 times the tan δ at 60 °C value (*e.g*., 3.5, 3.6, 3.7, 3.8, 3.9, 4, 4.1, 4.2, 4.3, 4.4, 4.5, 4.6, 4.7, 4.8, 4.9, 5, or more), preferably at least 3.7 times or 3.7 times to 4.7 times (*e.g*., 3.7, 3.8, 3.9, 4, 4.1, 4.2, 4.3, 4.4, 4.5, 4.6, 4.7) the tan δ at 60 °C value; or (b) a value for tan δ at 30 °C of at least 1.6 times (*e.g*., 1.6, 1.7, 1.8, 1.9, 2, 2.1 or more) the tan δ at 60 °C value, preferably between 1.6 times and 2 times the tan δ at 60 °C value; or (c) a value for E' at 30 °C of at least 70 times (*e.g*., 70, 72, 74, 75, 76, 78, 80, 82, 84, 85, 86, 88, 90 times or more) the tan δ at 60 °C value, preferably at least 75 times or 75 times to 90 times (*e.g*., 75, 76, 77, 78, 79, 80, 81, 82, 83, 84, 85, 86, 87, 88, 89 or 90 times) the tan δ at 60 °C value; in certain such embodiments, the value for tan δ at 60 °C is combined with each of (a), (b), and (c). In certain embodiments of the first-third embodiments, one of the foregoing values for tan δ at 60 °C (*e.g.,* 0.15 to 0.25 or 0.16 to 0.2) is combined with (a) a value for δ at 0 °C of between 3.7 to 4.7 times the tan δ at 60 °C value. In certain embodiments of the first-third embodiments, one of the foregoing values for tan δ at 60 °C (*e.g*.,0.15 to 0.25 or 0.16 to 0.2) is combined with (b) a value for tan δ at 30 °C of between 1.6 and 2 times the tan δ at 60 °C value. In certain embodiments of the first-third embodiments, one of the foregoing values for tan δ at 60 °C (*e.g*.,0.15 to 0.25 or 0.16 to 0.2) is combined with (c) a value for E' at 30 °C of between 75 and 90 times the 60 °C value. In certain embodiments of the first-third embodiments, one of the foregoing values for tan δ at 60 °C (*e.g*.,0.15 to 0.25 or 0.16 to 0.2) is combined with one of the foregoing values for tan δ at -30 °C, one of the foregoing values for tan δ at 0 °C, and one of the foregoing values for E' at 30 °C.

In certain embodiments of the first-third embodiments, the rubber composition has a room temperature Eb of at least 400% (*e.g.,* 400%, 405%, 410%, 415%, 420%, 425%, 430%, 435%, 440%, 445%, 450%, 455%, 460%, 465%, 470%, 475%, 480%, 485%, 490%, 495%, 500% or more) or within a range of 400-550% or 400-500%, preferably at least 450% or within the range of 450-550% or 450-500% or a sub-range within one of the foregoing range. The foregoing room temperature Eb values can be determined according to the procedure described below and refers to measurements made at 23 ° C.

In certain embodiments of the first-third embodiments, the rubber composition has a hot Eb of at least 275%, (*e.g*., 275%, 280%, 285%, 290%, 295%, 300%, 305%, 310%, 315%, 320%, 325%, 330%, 335%, 340%, 345%, 350%, 355%, 360%, 365%, 370%, 375%, or more) or within a range of 275-400% or 275-375%, preferably at least 300% (*e.g.,* 300%, 305%, 310%, 315%, 320%, 325%, 330%, 335%, 340%, 345%, 350%, 355%, 360%, 365%, 370%, 375%, or more) or within a range of 300-400% or 300-375%, more preferably at least 325% (e.g., 325%, 330%, 335%, 340%, 345%, 350%, 355%, 360%, 365%, 370%, 375%, or more) or 325-400% or 325-375% or a sub-range within one of the foregoing range. The foregoing hot Eb values can be determined according to the procedure described below and refers to measurements made at 100 ° C.

In certain embodiments of the first-third embodiments, the rubber composition has a hot EbxTb (with both Eb and Tb measured at 100 °C) of at least 3100 (*e.g.,* 3100, 3150, 3200, 3250, 3300, 3350, 3400, 3450, 3500, 3550, 3600, 3650, 3700, 3750, 3800, 3850, 3900, 3950, 4000, 4050, 4100, 4150 4200, 4250, 4300 or more), preferably at least 3500 (e.g., 3500, 3550, 3600, 3650, 3700, 3750, 3800, 3850, 3900, 3950, 4000, 4050, 4100, 4150 4200, 4250, 4300 or more), more preferably at least 3700 or even at least 4000. In certain such embodiments, the hot TbxEb is 3100-4300, preferably 3500-4300 or 3700 to 4000 or a sub-range within one of the foregoing ranges. The hot TbxEb is calculated by multiplying the hot Tb with the hot Eb value, which values can be determined according to the procedure described below and refers to measurements made at 100 ° C.

In certain embodiments of the first-third embodiments, the rubber composition meets at least one of the following: (d) an Eb at 23 °C of at least 400%, preferably at least 450%, more preferably at least 475%, (e) an Eb at 100 °C of at least 275%, preferably at least 300%, more preferably at least 325%, or (f) a Tb at 100 °C x Eb at 100 °C value of at least 3100, preferably at least 3500, more preferably at least 3700 or even at least 4000. In certain of the foregoing embodiments, each of (d)-(f) is met, preferably for each according to each of the "preferably" values and more preferably for each according to each of "more preferably" values.

The room temperature Eb represents an elongation at break measurement (in terms of % elongation), providing an indication of a rubber composition's tear resistance. The abbreviation Tb refers to tensile at break, which measurement (made in units of MPa) provides an indication of a rubber composition's strength by measuring the maximum stress it can withstand before breaking. Eb and Tb can be measured following the guidelines, but not restricted to, the standard procedure described in ASTM D-412, with dumbbell-shaped samples having a cross-section dimension of 4 mm in width and 1.9 mm in thickness at the center. During measurement, specimens may be strained at a constant rate (20% per second) and the resulting force recorded as a function of extension (strain). Room temperature measurements refer to measurements taken at 23 °C and hot measurements refer to measurements taken at 100 °C.

### EXAMPLES

The following examples illustrate specific and exemplary embodiments and/or features of the embodiments of the present disclosure.

Tire tread rubber compositions can be prepared using the ingredients set forth in Table 1. The amounts listed for SBRs represent the amount of rubber (excluding any liquid plasticizer used to extend the rubber). Example 1 can be considered to be a tire tread rubber composition according to the present disclosure whereas Examples C1 to C6 can be considered to be comparative tire tread rubber compositions. Each of the rubber compositions can be mixed utilizing tandem-type mixing procedure (generally as described above) with a non-productive stage (conducted within a (maximum) temperature in the range of about 130 to about 180 °C) and productive mixing stage (conducted within a (maximum) temperature range not exceeding about 120°C).

| **Table 1** | | | | | | | |
|---|---|---|---|---|---|---|---|
| **Ingredient** | **Inventive** | **C1** | **C2** | **C3** | **C4** | **C5** | **C6** |
| SBR1 | 65 | 35 | 65 | 65 | 45 | 0 | 65 |
| SBR2 | 14.09 | 44.09 | 14.09 | 14.09 | 0 | 14.09 | 14.09 |
| SBR3 | 20.91 | 20.91 | 20.91 | 20.91 | 20.91 | 25.91 | 20.91 |
| SBR4 | 0 | 0 | 0 | 0 | 34.09 | 60 | 0 |
| Silica 1 | 70 | 70 | 40 | 70 | 70 | 70 | 0 |
| Silica 2 | 0 | 0 | 0 | 0 | 0 | 0 | 70 |
| Carbon black (N200 series) | 7 | 7 | 20 | 7 | 7 | 7 | 7 |
| Hydrocarbon resin¹ | 9 | 9 | 9 | 19 | 9 | 9 | 9 |
| Total liquid plasticizer² | 19.1 | 30.4 | 19.1 | 13.1⁷ | 26.6 | 43.5 | 19.1 |
| Antioxidants³ | 1.72 | 1.72 | 1.72 | 1.72 | 1.72 | 1.72 | 1.72 |
| Sulfur | 1.8 | 1.8 | 1.8 | 1.8 | 1.8 | 1.8 | 1.8 |
| Accelerators⁴ | 4.85 | 4.85 | 4.85 | 4.85 | 4.85 | 4.85 | 4.85 |
| Vulcanizing activators⁵ | 4.5 | 4.5 | 4.5 | 4.5 | 4.5 | 4.5 | 4.5 |
| Other ingredients⁶ | 2.05 | 2.05 | 2.05 | 2.05 | 2.05 | 2.05 | 2.05 |
| SBR1 is an SBR having a silica-reactive functional group and a Tg in the range of -50 to -40 °C. | | | | | | | |
| SBR 2 is a non-functionalized SBR having a Tg in the range of -25 to -10 which is extended with a petroleum oil. | | | | | | | |
| SBR 3 is a non-functionalized SBR having an overall Tg in the range of -25 to -10 °C which is extended with low molecular weight SBR. | | | | | | | |
| SBR 4 is a non-functionalized SBR having a Tg in the range of -25 to -10 °C, which is not extended with low molecular weight SBR but is instead extended with a petroleum oil. | | | | | | | |
| Silica 1 is a reinforcing silica filler having a BET surface area in the range of 250 to 320 m²/g. | | | | | | | |
| Silica 2 is a reinforcing silica filler having a BET surface area below 200 m²/g. | | | | | | | |
| 1- the hydrocarbon resin is an C5 type aliphatic resin having a Tg in the range of 40 to 60 °C | | | | | | | |
| 2 - the total liquid plasticizer includes low molecular weight SBR from SBR3 (when utilized), free oil, and extender oil from SBR2 or SBR4 (when utilized) | | | | | | | |
| 3 to 6 - each lists the total amounts (with the accelerators including DPG, CBS and MBTS and the other ingredients including a combination of processing aid and vulcanization inhibitor) | | | | | | | |
| 7 - for example C3 the liquid plasticizer is a combination of low molecular weight SBR from SBR3 and extender oil from SBR2 (but no free oil is used) | | | | | | | |

Table 2 provides predicted properties for each of the rubber compositions from Table 1. Notably, the tan δ values can be measured in accordance with the Gabo procedures described in the above paragraphs and the E' values can be measured in accordance with the procedures describe above. The room temperature Eb represents an elongation at break measurement (in terms of % elongation), providing an indication of a rubber composition's tear resistance. The abbreviation Tb refers to tensile at break, which measurement (made in units of MPa) provides an indication of a rubber composition's strength by measuring the maximum stress it can withstand before breaking. Eb and Tb can be measured following the guidelines, but not restricted to, the standard procedure described in ASTM D-412, with dumbbell-shaped samples having a cross-section dimension of 4 mm in width and 1.9 mm in thickness at the center. During measurement, specimens may be strained at a constant rate (20% per second) and the resulting force recorded as a function of extension (strain). Room temperature measurements refer to measurements taken at 23 °C and hot measurements refer to measurements taken at 100 °C. Results are reported in Table 2 below with the data for the inventive example (*i.e*., Example 1) used to index the values for the comparative examples. As a non-limiting example, if the value for Example 1 for tan δ at 60 ° C was 0.18 and the value for Example C1 for tan δ at 60 ° C were 0.27, the indexed values would be reported as 100 and 150, respectively, with the 150 being calculated from (0.27/0.18)*100.

| **Table 2** | | | | | | | |
|---|---|---|---|---|---|---|---|
| | **Inventive** | **C1** | **C2** | **C3** | **C4** | **C5** | **C6** |
| indexed tan d at 0 °C | 100 | 103 | 106 | 110 | 101 | 103 | 103 |
| tan d at 0 °C/tan d at 60 °C | 4.66 | 4.5 | 5.05 | 4.1 | 4.9 | 4.8 | 4.8 |
| indexed tan d at 30 °C | 100 | 106 | 101 | 114 | 99 | 106 | 103 |
| E' at 30 °C/tan d at 60 °C | 84 | 61 | 52 | 70 | 79 | 56 | 71 |
| indexed E' at 30 °C | 100 | 77 | 60 | 103 | 90 | 67 | 85 |
| Tan δ at 30 °C/tan d at 60 °C | 1.60 | 1.58 | 1.66 | 1.46 | 1.65 | 1.69 | 1.64 |
| Tan d at 60 °C | 0.163 | 0.175 | 0.159 | 0.203 | 0.155 | 0.162 | 0.163 |
| Eb at 23 °C | 483 | 546 | 463 | 585 | 469 | 534 | 481 |
| Eb at 100 °C | 333 | 352 | 291 | 372 | 332 | 332 | 300 |
| Tb × Eb at 100 °C | 3167 | 3170 | 2799 | 3327 | 3020 | 2862 | 3042 |

As can be seen from the data provided in Table 2, varying the ingredients in the comparative rubber compositions produces predicted properties which differ from the predicted properties of the inventive rubber composition. More specifically, as to the rubber composition of comparative example C1, using less than a majority by weight of a SBR (i) (and commensurately more of a SBR (ii)), produces a rubber composition with worse rolling resistance, and a ratio of E' at 30 °C/tan δ at 60 °C of less than 70. As to the rubber composition of comparative example C2, using less reinforcing silica filler having a BET surface area in the range of 250 to 320 m²/g, produces a rubber composition with a ratio of E' at 30 °C/tan δ at 60 °C of less than 70, an Eb at 100 °C of less than 300%, and a TbxEb of less than 3100. As to the rubber composition of comparative example C3, using more hydrocarbon resin (*i.e*., 19 phr rather than 9 phr), produces a rubber composition having a ratio of E' at 30 °C/tan δ at 60 °C of less than 75, a ratio of tan δ at 30 °C/tan δ at 60 °C of less than 1.6, worse rolling resistance, and a TbxEb of less than 3500. As to the rubber composition of comparative example C4, using less than a majority by weight of a SBR (i) and replacing the SBR2 with SBR4 (SBR4 has a somewhat higher Tg than SBR2), produces a rubber composition having a ratio of tan δ at 0 °C/tan δ at 60 °C of greater than 4.7, worse dry performance and a TbxEb of less than 3100. As to the rubber composition of comparative example C5, eliminating a SBR (i) (*i.e.,* SBR1) and replacing it with non-functionalized SBR4, produces a rubber composition having a ratio of tan δ at 0 °C/tan δ at 60 °C of greater than 4.7, a ratio of E' at 30 °C/tan δ at 60 °C of less than 70, and a TbxEb of less than 3100. As to the rubber composition of comparative example C6, using a silica filler having a lower BET surface area, produces a rubber composition having a ratio of tan δ at 0 °C/tan δ at 60 °C that is above 4.7, a ratio of E' at 30 °C/tan δ at 60 °C that is less than 75, an Eb at 100 °C that is only 300%, and a Tb*Eb that is less than 3100.

## Claims

1. A tire tread rubber composition made of ingredients comprising:
(a) 100 parts of an elastomer component comprising:
i. 51-75 parts of at least one styrene-butadiene rubber having a silica-reactive functional group and a Tg of -50 to -35 °C, preferably -50 to -40 °C, and
ii. 25-49 parts of at least one non-functionalized styrene-butadiene rubber having a Tg of -30 to -15 °C, preferably -25 to -15 °C;
(b) at least one reinforcing silica filler in an amount of 60-90 phr, preferably having a BET surface area of 200 to 350 m²/g;
(c) no more than 10 phr of carbon black filler;
(d) 2-14 phr of at least one hydrocarbon resin having a Tg of 40 to 60 °C;
(e). 15-35 phr of liquid plasticizer; and
(f) a cure package,
wherein at least a portion of (e) is provided by a low molecular weight styrene-butadiene rubber, and wherein the Tg is measured according to the method as disclosed in the description.

2. The tire tread rubber composition of claim 1, wherein the low molecular weight styrene-butadiene rubber has a Tg of -30 to -10 °C and a Mw of less than 200,000 grams/mole, according to a polystyrene standard and determined by GPC.

3. The tire tread rubber composition of claim 1 or claim 2, wherein (a)(i) and (a)(ii) are present in a total amount of at least 90% by weight of the elastomer component, preferably 100% by weight of the elastomer component.

4. The tire tread rubber composition of any one of claims 1-3, wherein the at least one hydrocarbon resin comprises an aliphatic resin, preferably a C5 homopolymer or copolymer resin.

5. The tire tread rubber composition of any one of claims 1-4, wherein the rubber composition has a compound Tg of 10 to -20 °C, preferably 0 to -15 °C.

6. The tire tread rubber composition of any one of claims 1-5, wherein the styrene-butadiene rubber (a)(i) has a Mw less than the styrene-butadiene rubber (a)(ii).

7. The tire tread rubber composition of claim 6, wherein the at least one styrene-butadiene rubber (a)(i) has a Mw of 300,000 to 500,000 grams/mole and the at least one styrene-butadiene rubber (a)(ii) has a Mw of 400,000 to 700,000 grams/mole, both according to a polystyrene standard and determined by GPC.

8. The tire tread rubber composition of any one of claims 1-7, wherein (a)(i) comprises an oil-extended styrene-butadiene rubber extended with 30-40 parts of liquid plasticizer per 100 parts of styrene-butadiene rubber.

9. The tire tread rubber composition of any one of claims 1-8, wherein the elastomer component has an average Tg of -50 to -20 °C, preferably -45 to -25 °C.

10. The tire tread rubber composition of any one of claims 1-9, wherein (d) and (e) are present in a total amount of no more than 35 phr.

11. The tire tread rubber composition of any one of claims 1-10, wherein (a)(ii) comprises a non-functionalized styrene-butadiene rubber (iii) extended with 30-40 parts of the low molecular weight styrene butadiene rubber per 100 parts of the non-functionalized styrene-butadiene rubber (iii).

12. The tire tread rubber composition of any one of claims 1-11, wherein (a)(i) is functionalized at least one of a substituted or unsubstituted amino group, an amide residue, an isocyanate group, an imidazolyl group, an indolyl group, a substituted or unsubstituted imino group, a nitrile group, a pyridyl group, or a ketimine group; preferably an unsubstituted amino group, a substituted amino group or a substituted imino group.

13. The tire tread rubber composition of any one of claims 1-12, wherein the rubber composition has a value for tan δ at 60 °C of 0.15 to 0.25, preferably 0.16 to 0.2 and meets at least one of the following, preferably (c), more preferably each of the following:
(a) has a value for tan δ at 0 °C of at least 3.5 times the tan δ at 60 °C value, preferably between 3.7 times and 4.7 times the tan δ at 60 °C value;
(b) has a value for tan δ at 30 °C of at least 1.6 times the tan δ at 60 °C value, preferably between 1.6 times and 2 times the tan δ at 60 °C value; or
(c) has a value for E' at 30 °C of at least 70 times the tan δ at 60 °C value, preferably between 75 times and 90 times the tan δ at 60 °C value, wherein tan δ and E' are determined according to the methods as disclosed in the description.

14. The tire tread rubber composition of any one of claims 1-13, wherein the rubber composition meets at least one of the following, preferably each of the following:
(d) has an Eb at 23 °C of at least 400%, more preferably at least 450%,
(e) has an Eb at 100 °C of at least 275%, preferably at least 300%, more preferably at least 325%, or
(f) has a Tb at 100 °C x Eb at 100 °C value of at least 3100, preferably at least 3500, more preferably at least 3700 or even at least 4000, wherein Eb and Tb are determined according to the methods as disclosed in the description.

15. A tire including a road-contacting tread comprising the tire tread rubber composition of any one of claims 1 to 14.

16. A method for providing a tire with a road-contacting tread which tire has balanced wet performance, rolling resistance and cornering performance, the method comprising utilizing the tire tread rubber composition according to any one of claims 1-14 for the road-contacting tread.

## Patentansprüche

1. Reifenlaufflächenkautschukzusammensetzung, die aus Bestandteilen hergestellt ist, umfassend:
(a) zu 100 Teilen eine Elastomerkomponente, umfassend:
i. zu 51-75 Teilen mindestens einen Styrol-Butadien-Kautschuk, der eine siliciumdioxidreaktive funktionelle Gruppe und eine Tg von -50 bis -35 °C, vorzugsweise -50 bis -40 °C, aufweist und
ii. zu 25-49 Teilen mindestens einen nicht funktionalisierten Styrol-Butadien-Kautschuk, der eine Tg von -30 bis -15 °C, vorzugsweise -25 bis -15 °C, aufweist;
(b) mindestens einen verstärkenden Siliciumdioxidfüllstoff in einer Menge von 60-90 phr, vorzugsweise, der einen BET-Oberflächenbereich von 200 bis 350 m²/g aufweist;
(c) zu nicht mehr als 10 phr Rußfüllstoff;
(d) zu 2-14 phr mindestens einen Kohlenwasserstoffharz, der eine Tg von 40 bis 60 °C aufweist;
(e). zu 15-35 phr flüssigen Weichmacher; und
(f) eine Härtungspackung,
wobei mindestens ein Teil von (e) durch einen Styrol-Butadien-Kautschuk mit niedrigem Molekulargewicht bereitgestellt wird und wobei die Tg gemäß dem in der Beschreibung offenbarten Verfahren gemessen wird.

2. Reifenlaufflächenkautschukzusammensetzung nach Anspruch 1, wobei der Styrol-Butadien-Kautschuk mit niedrigem Molekulargewicht eine Tg von -30 bis -10 °C und ein Mw von geringer als 200.000 Gramm/Mol, gemäß einem Polystyrolstandard und bestimmt durch GPC, aufweist.

3. Reifenlaufflächenkautschukzusammensetzung nach Anspruch 1 oder 2, wobei (a)(i) und (a)(ii) in einer Gesamtmenge von mindestens 90 Gew.-% der Elastomerkomponente, vorzugsweise 100 Gew.-% der Elastomerkomponente, vorhanden sind.

4. Reifenlaufflächenkautschukzusammensetzung nach einem der Ansprüche 1 bis 3, wobei das mindestens eine Kohlenwasserstoffharz ein aliphatisches Harz, vorzugsweise ein C5-Homopolymer- oder -copolymerharz, umfasst.

5. Reifenlaufflächenkautschukzusammensetzung nach einem der Ansprüche 1 bis 4, wobei die Kautschukzusammensetzung eine Verbindungs-Tg von 10 bis -20 °C, vorzugsweise 0 bis -15 °C, aufweist.

6. Reifenlaufflächenkautschukzusammensetzung nach einem der Ansprüche 1 bis 5, wobei der Styrol-Butadien-Kautschuk (a)(i) ein geringeres Mw als der Styrol-Butadien-Kautschuk (a)(ii) aufweist.

7. Reifenlaufflächenkautschukzusammensetzung nach Anspruch 6, wobei der mindestens eine Styrol-Butadien-Kautschuk (a)(i) ein Mw von 300.000 bis 500.000 Gramm/Mol aufweist und der mindestens eine Styrol-Butadien-Kautschuk (a)(ii) ein Mw von 400.000 bis 700.000 Gramm/Mol aufweist, beides gemäß einem Polystyrolstandard und bestimmt durch GPC.

8. Reifenlaufflächenkautschukzusammensetzung nach einem der Ansprüche 1 bis 7, wobei (a)(i) einen ölgestreckten Styrol-Butadien-Kautschuk umfasst, der mit 30-40 Teilen flüssigem Weichmacher pro 100 Teilen Styrol-Butadien-Kautschuk gestreckt ist.

9. Reifenlaufflächenkautschukzusammensetzung nach einem der Ansprüche 1 bis 8, wobei die Elastomerkomponente eine durchschnittliche Tg von -50 bis -20 °C, vorzugsweise von -45 bis -25 °C, aufweist.

10. Reifenlaufflächenkautschukzusammensetzung nach einem der Ansprüche 1 bis 9, wobei (d) und (e) in einer Gesamtmenge von nicht mehr als 35 phr vorhanden sind.

11. Reifenlaufflächenkautschukzusammensetzung nach einem der Ansprüche 1 bis 10, wobei (a)(ii) einen nicht funktionalisierten Styrol-Butadien-Kautschuk (iii) umfasst, der mit 30-40 Teilen des Styrol-Butadien-Kautschuks mit niedrigem Molekulargewicht pro 100 Teilen des nicht funktionalisierten Styrol-Butadien-Kautschuks (iii) gestreckt ist.

12. Reifenlaufflächenkautschukzusammensetzung nach einem der Ansprüche 1 bis 11, wobei (a)(i) mit mindestens einem von einer substituierten oder unsubstituierten Aminogruppe, einem Amidrest, einer Isocyanatgruppe, einer Imidazolylgruppe, einer Indolylgruppe, einer substituierten oder unsubstituierten Iminogruppe, einer Nitrilgruppe, einer Pyridylgruppe oder einer Ketimingruppe; vorzugsweise einer unsubstituierten Aminogruppe, einer substituierten Aminogruppe oder einer substituierten Iminogruppe, funktionalisiert ist.

13. Reifenlaufflächenkautschukzusammensetzung nach einem der Ansprüche 1 bis 12, wobei die Kautschukzusammensetzung einen Wert für tan δ bei 60 °C von 0,15 bis 0,25, vorzugsweise 0,16 bis 0,2, aufweist und mindestens eines der Folgenden, vorzugsweise (c), mehr bevorzugt jedes der Folgenden erfüllt:
(a) einen Wert für tan δ bei 0 °C von mindestens einem 3,5 -Fachen des Werts von tan δ bei 60 °C, vorzugsweise zwischen einem 3,7-Fachen und einem 4,7-Fachen des Werts von tan δ bei 60 °C, aufweist;
(b) einen Wert für tan δ bei 30 °C von mindestens einem 1,6-Fachen des Werts von tan δ bei 60 °C, vorzugsweise zwischen dem 1,6-Fachen und einem 2-Fachen des Werts von tan δ bei 60 °C, aufweist; oder
(c) einen Wert für E' bei 30 °C von mindestens einem 70-Fachen des Werts von tan δ bei 60 °C, vorzugsweise zwischen einem 75-Fachen und einem 90-Fachen des Werts von tan δ bei 60 °C, aufweist, wobei tan δ und E' gemäß den in der Beschreibung offenbarten Verfahren bestimmt werden.

14. Reifenlaufflächenkautschukzusammensetzung nach einem der Ansprüche 1 bis 13, wobei die Kautschukzusammensetzung mindestens eines der Folgenden, vorzugsweise jedes der Folgenden, erfüllt:
(d) eine Eb bei 23 °C von mindestens 400 %, mehr bevorzugt mindestens 450 %, aufweist,
(e) eine Eb bei 100 °C von mindestens 275 %, vorzugsweise mindestens 300 %, mehr bevorzugt mindestens 325 %, aufweist oder
(f) einen Wert von Tb bei 100 °C x Eb bei 100 °C von mindestens 3100, vorzugsweise mindestens 3500, mehr bevorzugt mindestens 3700 oder sogar mindestens 4000, aufweist, wobei Eb und Tb gemäß den in der Beschreibung offenbarten Verfahren bestimmt werden.

15. Reifen, einschließlich einer Straßenkontaktlauffläche, umfassend die Reifenlaufflächenkautschukzusammensetzung nach einem der Ansprüche 1 bis 14.

16. Verfahren zum Bereitstellen eines Reifens mit einer Straßenkontaktlauffläche, wobei der Reifen eine(n) ausgewogen(e) Nassfahrleistung, Rollwiderstand und Kurvenleistung aufweist, das Verfahren umfassend ein Verwenden der Reifenlaufflächenkautschukzusammensetzung nach einem der Ansprüche 1 bis 14 für die Straßenkontaktlauffläche umfasst.

## Revendications

1. Composition de caoutchouc de bande de roulement de pneu constituée d'ingrédients comprenant :
(a) 100 parties d'un composant élastomère comprenant :
i. 51 à 75 parties d'au moins un caoutchouc butadiène-styrène ayant un groupe fonctionnel réactif à la silice et une Tg comprise entre -50 et -35 °C, de préférence entre -50 et -40 °C, et
ii. 25 à 49 parties d'au moins un caoutchouc butadiène-styrène non fonctionnalisé ayant une Tg comprise entre -30 et -15 °C, de préférence -25 et - 15 °C ;
(b) au moins une charge de silice de renforcement dans une quantité de 60 à 90 pce, ayant de préférence une surface BET de 200 à 350 m²/g ;
(c) pas plus de 10 pce de charge de noir de carbone ;
(d) 2 à 14 pce d'au moins une résine hydrocarbonée ayant une Tg comprise entre 40 et 60 °C ;
(e). 15 à 35 pce de plastifiant liquide ; et
(f) un ensemble de durcissement,
dans lequel au moins une partie de (e) est fournie par un caoutchouc butadiène-styrène de faible poids moléculaire, et dans lequel la Tg est mesurée selon le procédé tel que décrit dans la description.

2. Composition de caoutchouc de bande de roulement de pneu selon la revendication 1, dans laquelle le caoutchouc butadiène-styrène de faible poids moléculaire a une Tg de -30 à -10 °C et un p.m. inférieur à 200 000 grammes/mole, selon un standard de polystyrène et déterminé par GPC.

3. Composition de caoutchouc de bande de roulement de pneu selon la revendication 1 ou la revendication 2, dans laquelle (a)(i) et (a)(ii) sont présents dans une quantité totale d'au moins 90 % en poids du composant élastomère, de préférence 100 % en poids du composant élastomère.

4. Composition de caoutchouc de bande de roulement de pneu selon l'une quelconque des revendications 1 à 3, dans laquelle l'au moins une résine hydrocarbonée comprend une résine aliphatique, de préférence une résine homopolymère ou copolymère en C5.

5. Composition de caoutchouc de bande de roulement de pneu selon l'une quelconque des revendications 1 à 4, dans laquelle la composition de caoutchouc a une Tg de 10 à -20 °C, de préférence de 0 à -15 °C.

6. Composition de caoutchouc de bande de roulement de pneu selon l'une quelconque des revendications 1 à 5, dans laquelle le caoutchouc butadiène-styrène (a)(i) a un p.m. inférieur au caoutchouc butadiène-styrène (a)(ii).

7. Composition de caoutchouc de bande de roulement de pneu selon la revendication 6, dans laquelle l'au moins un caoutchouc butadiène-styrène (a)(i) a un p.m. de 300 000 à 500 000 grammes/mole et l'au moins un caoutchouc butadiène-styrène (a)(ii) a un p.m. de 400 000 à 700 000 grammes/mole, tous deux selon un standard de polystyrène et déterminés par GPC.

8. Composition de caoutchouc de bande de roulement de pneu selon l'une quelconque des revendications 1 à 7, dans laquelle (a)(i) comprend un caoutchouc butadiène-styrène étendu à l'huile étendu avec 30 à 40 parties de plastifiant liquide pour 100 parties de caoutchouc butadiène-styrène.

9. Composition de caoutchouc de bande de roulement de pneu selon l'une quelconque des revendications 1 à 8, dans laquelle le composant élastomère a une Tg moyenne comprise entre -50 et -20 °C, de préférence -45 et -25 °C.

10. Composition de caoutchouc de bande de roulement de pneu selon l'une quelconque des revendications 1 à 9, dans laquelle (d) et (e) sont présents en une quantité totale ne dépassant pas 35 pce.

11. Composition de caoutchouc de bande de roulement de pneu selon l'une quelconque des revendications 1 à 10, dans laquelle (a)(ii) comprend un caoutchouc butadiène-styrène non fonctionnalisé (iii) étendu avec 30 à 40 parties de caoutchouc butadiène-styrène à faible poids moléculaire pour 100 parties de caoutchouc butadiène-styrène non fonctionnalisé (iii).

12. Composition de caoutchouc de bande de roulement de pneu selon l'une quelconque des revendications 1 à 11, dans laquelle (a)(i) est fonctionnalisé par au moins l'un parmi un groupe amino substitué ou non substitué, un résidu amide, un groupe isocyanate, un groupe imidazolyle, un groupe indolyle, un groupe imino substitué ou non substitué, un groupe nitrile, un groupe pyridyle ou un groupe kétimine ; de préférence un groupe amino non substitué, un groupe amino substitué ou un groupe imino substitué.

13. Composition de caoutchouc de bande de roulement de pneu selon l'une quelconque des revendications 1 à 12, dans laquelle la composition de caoutchouc a une valeur de tan δ à 60 °C de 0,15 à 0,25, de préférence de 0,16 à 0,2 et satisfait à au moins l'un parmi ce qui suit, de préférence (c), plus préférablement à chacun de ce qui suit :
(a) a une valeur de tan δ à 0 °C d'au moins 3,5 fois la valeur de tan δ à 60 °C, de préférence entre 3,7 fois et 4,7 fois la valeur de tan δ à 60 °C ;
(b) a une valeur de tan δ à 30 °C d'au moins 1,6 fois la valeur de tan δ à 60 °C, de préférence entre 1,6 fois et 2 fois la valeur de tan δ à 60 °C ; ou
(c) a une valeur pour E' à 30 °C d'au moins 70 fois la valeur de tan δ à 60 °C, de préférence entre 75 fois et 90 fois la valeur de tan δ à 60 °C, dans laquelle tan δ et E' sont déterminés selon les procédés tels que décrits dans la description.

14. Composition de caoutchouc de bande de roulement de pneu selon l'une quelconque des revendications 1 à 13, dans laquelle la composition de caoutchouc satisfait à au moins l'un parmi ce qui suit, de préférence chacun de ce qui suit :
(d) a un Eb à 23 °C d'au moins 400 %, de préférence d'au moins 450 %,
(e) a un Eb à 100 °C d'au moins 275 %, de préférence d'au moins 300 %, plus préférablement d'au moins 325 %, ou
(f) a une valeur de Tb à 100 °C x Eb à 100 °C d'au moins 3 100, de préférence d'au moins 3 500, plus préférablement d'au moins 3 700 ou même d'au moins 4 000, dans laquelle Eb et Tb sont déterminés selon les procédés tels que décrits dans la description.

15. Pneu comportant une bande de roulement en contact avec la route, comprenant la composition de caoutchouc de bande de roulement de pneu selon l'une quelconque des revendications 1 à 14.

16. Procédé de fourniture d'un pneu avec une bande de roulement en contact avec la route qui a une performance en milieu humide équilibrée, une résistance au roulement et une tenue dans les virages, le procédé comprenant l'utilisation de la composition de caoutchouc de bande de roulement de pneu selon l'une quelconque des revendications 1 à 14 pour la bande de roulement en contact avec la route.
